# EUROPEAN PATENT SPECIFICATION

(11) **EP 2 963 959 B1**
(45) Date of publication and mention of the grant of the patent: **26.07.2017**
(21) Application number: 14794336.9
(22) Date of filing: 06.05.2014
(51) Int. Cl.: H04W 12/04, H04W 4/00, H04W 12/06, H04W 16/02, H04W 76/02

(54) **METHOD, CONFIGURATION DEVICE, AND WIRELESS DEVICE FOR ESTABLISHING CONNECTION BETWEEN DEVICES**
VERFAHREN, KONFIGURATIONSVORRICHTUNG UND DRAHTLOSE VORRICHTUNG ZUM VERBINDUNGSAUFBAU ZWISCHEN VORRICHTUNGEN
PROCÉDÉ, DISPOSITIF DE CONFIGURATION ET DISPOSITIF SANS FIL PERMETTANT D'ÉTABLIR UNE CONNEXION ENTRE DES DISPOSITIFS

(30) Priority: 07.05.2013 CN 201310164866
(43) Date of publication of application: 06.01.2016
(73) Proprietor: Huawei Device Co., Ltd., Longgang District Shenzhen Guangdong 518129 (CN)
(72) Inventor: LI, Xiaoxian, Shenzhen Guangdong 518129 (CN); DING, Zhiming, Shenzhen Guangdong 518129 (CN)
(74) Representative: Pfenning, Meinig & Partner mbB
(86) International application number: PCT/CN2014/076823
(87) International publication number: WO 2014/180296

(56) References cited:
- EP-A1- 2 343 917
- WO-A1-2013/052865
- CN-A- 101 771 586
- CN-A- 101 771 659
- CN-A- 101 771 659
- CN-A- 102 695 173
- CN-A- 102 883 320
- CN-A- 102 932 401

## Description

### TECHNICAL FIELD

The present invention relates to the wireless communications field, and in particular, to a method for establishing a connection between devices, a configuration device, and a wireless device.

### BACKGROUND

With development of a wireless network, a Wireless Fidelity (Wireless Fidelity, Wi-Fi) network is widely used. Among users who successfully set up a wireless local area network (Wireless Local Area Network, WLAN), there are a large portion of users whose WLAN has no security parameter configured, which easily causes an attack on the network. To resolve problems such as security and complex operations existing when a user uses a WLAN, the Wi-Fi Alliance puts forward the Wi-Fi protected setup (Wi-Fi Protected Setup, WPS) standard with a purpose of simplifying an operation for setting up the WLAN by the user and ensuring security of the network used by the user, so that a user who knows little about WLAN setup and security can also simply and conveniently set up a secure WLAN, and can conveniently add a device to the WLAN.

Main components of the WPS include an access point (Access Point, AP), a registrar (Registrar) and an enrollee (Enrollee). The AP is used to convert a wired signal into a wireless signal; the registrar is used to manage network establishment and add/remove a device; and the enrollee is a device that requests to join the WLAN. On an infrastructure network, a registrar and an AP may be two devices independent from each other, and in this case, the registrar is referred to as an external registrar, and an intelligent terminal may be configured as an external registrar; or the registrar and the AP may be integrated into a same device. On a non-infrastructure network, for example, a peer to peer (Peer to Peer, P2P) network, a group owner (Group Owner, GO) device is equivalent to an AP with a registrar integrated in respect of a function, and a client (Client) device is equivalent to an enrollee in respect of a function. The GO performs WPS configuration on the Clinet, so that the Client joins a group in which the GO is located.

Configuration manners proposed in the WPS include: a personal identification number (Personal Identification Number, PIN) manner, a push button configuration (Push Button Configuration, PBC) manner, and a Near Field Communication (Near Field Communication, NFC) manner. A network is easily attacked when the PBC manner is applied; it is inconvenient to configure a device of a relatively large size when the NFC manner is applied, and in addition, in order to apply the NFC manner, a device also needs to have an NFC hardware interface, which imposes a high requirement on the device; a PIN in the PIN manner may be static or dynamic and is difficult to crack; however, the PIN manner cannot be applied to a device whose UI is limited, configuration is complex, and a learning cost of a user is relatively high. Therefore, it is necessary to provide a method for a simple and secure connection between devices. The document CN 1017711659, 7th July 2010, discloses a method for safe switch configuration.

### SUMMARY

Embodiments of the present invention provide a method for establishing a connection between devices, a configuration device, and a wireless device, so that a simple and secure connection may be established between the devices, so as to improve user experience.

To achieve the foregoing objective, the embodiments of the present invention use the following technical solutions:
According to a first aspect, a method for establishing a connection between devices is provided, and the method includes:
   acquiring configuration password information of a first wireless device and device identifier information of the first wireless device;
   performing verification on the configuration password information of the first wireless device with the first wireless device; and sending, to the first wireless device, a first encryption value obtained after a generated device connection code is encrypted, so that the first wireless device decrypts the first encryption value to obtain the device connection code, where the device connection code is used for device verification before the first wireless device and a second wireless device establish a connection;
   acquiring configuration password information of the second wireless device and device identifier information of the second wireless device; and performing verification on the configuration password information of the second wireless device with the second wireless device; and sending, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

In a first possible implementation manner, according to the first aspect, the acquiring configuration password information of a first/second wireless device is specifically implemented in any one of the following manners: scanning a multi-dimensional code of the first/second wireless device; or acquiring a personal identification number PIN of the first/second wireless device; or receiving a short-range low-power wireless signal sent by the first/second wireless device, where the short-range low-power wireless signal includes the configuration password information of the first/second wireless device; or acquiring the configuration password information of the first/second wireless device by using push button configuration; where
the short-range low-power wireless signal specifically includes a Near Field Communication NFC wireless signal, a low-power Bluetooth wireless signal, or a low-power Wireless Fidelity Wi-Fi signal; and
the acquiring device identifier information of the first/second wireless device is specifically implemented in any one of the following manners: scanning the multi-dimensional code of the first/second wireless device; or receiving a configuration indication message sent by the first/second wireless device, where the configuration indication message includes the device identifier information of the first/second wireless device; where
the multi-dimensional code is a static multi-dimensional code, or a dynamic multi-dimensional code dynamically generated by the first/second wireless device, where the multi-dimensional code includes the configuration password information of the first/second wireless device and/or the device identifier information of the first/second wireless device.

In a second possible implementation manner, with reference to the first aspect or the first possible implementation manner, the device connection code is specifically used for verifying, when the second wireless device and the first wireless device perform Wireless Fidelity protected setup WPS, whether both the first wireless device and the second wireless device have the device connection code; after the verification succeeds, the second wireless device receives a credential sent by the first wireless device, or the second wireless device sends a credential to the first wireless device; the second wireless device and the first wireless device perform a 4-way handshake by using the credential; and the second wireless device and the first wireless device establish a connection after the handshake succeeds;
or
verifying, when the second wireless device and the first wireless device perform a 4-way handshake by using the device connection code as a pre-shared key, whether both the first wireless device and the second wireless device have the device connection code; and the second wireless device and the first wireless device establish a connection after the verification succeeds.

According to a second aspect, a method for establishing a connection between devices is provided, and the method includes:
providing, by a second wireless device, configuration password information of the second wireless device and device identifier information of the second wireless device, so that a configuration device acquires the configuration password information of the second wireless device and the device identifier information of the second wireless device;
performing, by the second wireless device, verification on the configuration password information of the second wireless device with the configuration device; and receiving a second encryption value that is obtained after a device connection code is encrypted and that is sent by the configuration device, where the device connection code is generated by the configuration device and is used for device verification before the first wireless device and the second wireless device establish a connection; and decrypting, by the second wireless device, the second encryption value to obtain the device connection code; performing device verification with the first wireless device by using at least the device connection code; and establishing a connection with the first wireless device after the verification succeeds.

In a first possible implementation manner, according to the second aspect, the second wireless device receives device identifier information of the first wireless device sent by the configuration device; and
the performing device verification with the first wireless device by using at least the device connection code specifically includes: performing device verification with the first wireless device by using the device identifier information of the first wireless device and the device connection code.

In a second possible implementation manner, with reference to the second aspect or the first possible implementation manner, the providing, by a second wireless device, configuration password information of the second wireless device, so that the configuration device acquires the configuration password information of the second wireless device is specifically implemented in any one of the following manners: providing a multi-dimensional code of the second wireless device for the configuration device; or providing a personal identification number PIN of the second wireless device for the configuration device; or sending a short-range low-power wireless signal to the configuration device, where the short-range low-power wireless signal includes the configuration password information of the second wireless device; or providing the configuration password information of the second wireless device by using push button configuration; where
the short-range low-power wireless signal specifically includes a Near Field Communication NFC wireless signal, a low-power Bluetooth wireless signal, or a low-power Wireless Fidelity Wi-Fi signal; and
the providing, by a second wireless device, device identifier information of the second wireless device, so that the configuration device acquires the device identifier information of the second wireless device is specifically implemented in any one of the following manners: providing the multi-dimensional code of the second wireless device for the configuration device; or sending a configuration indication message to the configuration device, where the configuration indication message includes the device identifier information of the second wireless device; where
the multi-dimensional code is a static multi-dimensional code, or a dynamic multi-dimensional code dynamically generated by the second wireless device, where the multi-dimensional code includes the configuration password information of the second wireless device and/or the device identifier information of the second wireless device.

In a third possible implementation manner, with reference to the second aspect or the first possible implementation manner or the second possible implementation manner, the performing device verification with the first wireless device by using at least the device connection code; and establishing a connection with the first wireless device after the verification succeeds specifically includes:
performing, by the second wireless device, Wireless Fidelity protected setup WPS with the first wireless device; verifying whether both the first wireless device and the second wireless device have the device connection code; and after the verification succeeds, receiving a credential sent by the first wireless device, or sending a credential to the first wireless device; and
performing, by the second wireless device, a 4-way handshake with the first wireless device by using the credential, and establishing a connection with the first wireless device after the handshake succeeds; or
performing, by the second wireless device, a 4-way handshake with the first wireless device by using the device connection code as a pre-shared key; verifying whether both the first wireless device and the second wireless device have the device connection code; and establishing a connection with the first wireless device after the verification succeeds.

According to a third aspect, a configuration device is provided, where the configuration device includes a first acquiring unit, a first interacting unit, a second acquiring unit, and a second interacting unit, where
the first acquiring unit is configured to acquire configuration password information of a first wireless device and device identifier information of the first wireless device;
the first interacting unit is configured to: perform verification on the configuration password information of the first wireless device with the first wireless device; and send, to the first wireless device, a first encryption value obtained after a generated device connection code is encrypted, so that the first wireless device decrypts the first encryption value to obtain the device connection code, where the device connection code is used for device verification before the first wireless device and a second wireless device establish a connection;
the second acquiring unit is configured to acquire configuration password information of the second wireless device and device identifier information of the second wireless device; and
the second interacting unit is configured to: perform verification on the configuration password information of the second wireless device with the second wireless device; and send, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds. In a first possible implementation manner, according to the third aspect, the first/second acquiring unit is specifically configured to: scan a multi-dimensional code of the first/second wireless device; or acquire a personal identification number PIN of the first/second wireless device; or receive a short-range low-power wireless signal sent by the first/second wireless device, where the short-range low-power wireless signal includes the configuration password information of the first/second wireless device; or obtain the configuration password information of the first/second wireless device by using push button configuration; where
the short-range low-power wireless signal specifically includes a Near Field Communication NFC wireless signal, a low-power Bluetooth wireless signal, or a low-power Wireless Fidelity Wi-Fi signal; and
the first/second acquiring unit is further specifically configured to: scan the multi-dimensional code of the first/second wireless device; or receive a configuration indication message sent by the first/second wireless device, where the configuration indication message includes the device identifier information of the first/second wireless device; where
the multi-dimensional code is a static multi-dimensional code, or a dynamic multi-dimensional code dynamically generated by the first/second wireless device, where the multi-dimensional code includes the configuration password information of the first/second wireless device and/or the device identifier information of the first/second wireless device.

In a second possible implementation manner, with reference to the third aspect or the first possible implementation manner, the device connection code is specifically used for verifying, when the second wireless device and the first wireless device perform Wireless Fidelity protected setup WPS, whether both the first wireless device and the second wireless device have the device connection code; after the verification succeeds, the second wireless device receives a credential sent by the first wireless device, or the second wireless device sends a credential to the first wireless device; the second wireless device and the first wireless device perform a 4-way handshake by using the credential; and the second wireless device and the first wireless device establish a connection after the handshake succeeds;
or
verifying, when the second wireless device and the first wireless device perform a 4-way handshake by using the device connection code as a pre-shared key, whether both the first wireless device and the second wireless device have the device connection code; and the second wireless device and the first wireless device establish a connection after the verification succeeds.

According to a fourth aspect, a wireless device is provided, where the wireless device includes a providing unit, an interacting unit, and a connecting unit, where
the providing unit is configured to provide configuration password information of the wireless device and device identifier information of the wireless device, so that a configuration device acquires the configuration password information of the wireless device and the device identifier information of the wireless device;
the interacting unit is configured to: perform verification on the configuration password information of the wireless device between the wireless device and the configuration device; and receive a second encryption value that is obtained after a device connection code is encrypted and that is sent by the configuration device, where the device connection code is generated by the configuration device and is used for device verification before the first wireless device and the wireless device establish a connection; and
the connecting unit is configured to: decrypt the second encryption value to obtain the device connection code; perform device verification with the first wireless device by using at least the device connection code; and establish a connection with the first wireless device after the verification succeeds.

In a first possible implementation manner, according to the four aspect, the interacting unit is further configured to receive device identifier information of the first wireless device sent by the configuration device; and
the connecting unit is specifically configured to perform device verification with the first wireless device by using the device identifier information of the first wireless device and the device connection code.

In a second possible implementation manner, with reference to the fourth aspect or the first possible implementation manner, the providing unit is specifically configured to: provide a multi-dimensional code of the wireless device for the configuration device; or provide a personal identification number PIN of the wireless device for the configuration device; or send a short-range low-power wireless signal to the configuration device, where the short-range low-power wireless signal includes the configuration password information of the wireless device; or provide the configuration password information of the wireless device by using push button configuration; where
the short-range low-power wireless signal specifically includes a Near Field Communication NFC wireless signal, a low-power Bluetooth wireless signal, or a low-power Wireless Fidelity Wi-Fi signal; and the providing unit is further specifically configured to send a configuration indication message to the configuration device, where the configuration indication message includes the device identifier information of the wireless device; where
the multi-dimensional code is a static multi-dimensional code, or a dynamic multi-dimensional code dynamically generated by the wireless device, where the multi-dimensional code includes the configuration password information of the wireless device and/or the device identifier information of the wireless device.

In a third possible implementation manner, with reference to the fourth aspect or the first possible implementation manner, or the second possible implementation manner, the connecting unit is specifically configured to:
perform Wireless Fidelity protected setup WPS with the first wireless device; verify whether both the first wireless device and the wireless device have the device connection code; and after the verification succeeds, receive a credential sent by the first wireless device, or send a credential to the first wireless device; and
perform a 4-way handshake with the first wireless device by using the credential, and establish a connection with the first wireless device after the handshake succeeds; or
perform a 4-way handshake with the first wireless device by using the device connection code as a pre-shared key; verify whether both the first wireless device and the wireless device have the device connection code; and establish a connection with the first wireless device after the verification succeeds.

The embodiments of the present invention provide a method for establishing a connection between devices, a configuration device, and a wireless device. Configuration password information of a first wireless device and device identifier information of the first wireless device are acquired; verification on the configuration password information of the first wireless device is performed with the first wireless device, and a first encryption value obtained after a generated device connection code is encrypted is sent to the first wireless device, so that the first wireless device decrypts the first encryption value to obtain the device connection code, where the device connection code is used for device verification before the first wireless device and a second wireless device establish a connection; configuration password information of the second wireless device and device identifier information of the second wireless device are acquired; and verification on the configuration password information of the second wireless device is performed with the second wireless device, and a second encryption value obtained after the device connection code is encrypted and the device identifier information of the first wireless device are sent to the second wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

According to the solution, after verification performed between a configuration device and a first wireless device succeeds, the first wireless device may obtain a device connection code sent by the configuration device, and then after verification performed between the configuration device and a second wireless device succeeds, the second wireless device may obtain the device connection code sent by the configuration device. In this way, after obtaining device identifier information of the first wireless device and the device connection code, the second wireless device may use the device connection code to perform secure connection with the first wireless device indicated by the device identifier information of the first wireless device. The first wireless device and the second wireless device do not need to support multiple WPS configuration manners, and the first wireless device and the second wireless device can perform simple and secure connection as long as the configuration device can acquire configuration password information of the first wireless device and the second wireless device, which improves user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for establishing a connection between devices according to an embodiment of the present invention;
FIG. 2 is a schematic flowchart of another method for establishing a connection between devices according to an embodiment of the present invention;
FIG. 3A and FIG. 3B are a schematic interaction diagram of a method for establishing a connection between devices according to an embodiment of the present invention;
FIG. 4A and FIG. 4B are a schematic interaction diagram of another method for establishing a connection between devices according to an embodiment of the present invention;
FIG. 5A and FIG. 5B are a schematic interaction diagram of still another method for establishing a connection between devices according to an embodiment of the present invention;
FIG. 6A and FIG. 6B are a schematic interaction diagram of yet another method for establishing a connection between devices according to an embodiment of the present invention;
FIG. 7A and FIG. 7B are a schematic interaction diagram of still yet another method for establishing a connection between devices according to an embodiment of the present invention;
FIG. 8 is a schematic structural diagram of a configuration device according to an embodiment of the present invention;
FIG. 9 is a schematic structural diagram of a wireless device according to an embodiment of the present invention;
FIG. 10 is a schematic structural diagram of another configuration device according to an embodiment of the present invention; and
FIG. 11 is a schematic structural diagram of another wireless device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

### Embodiment 1

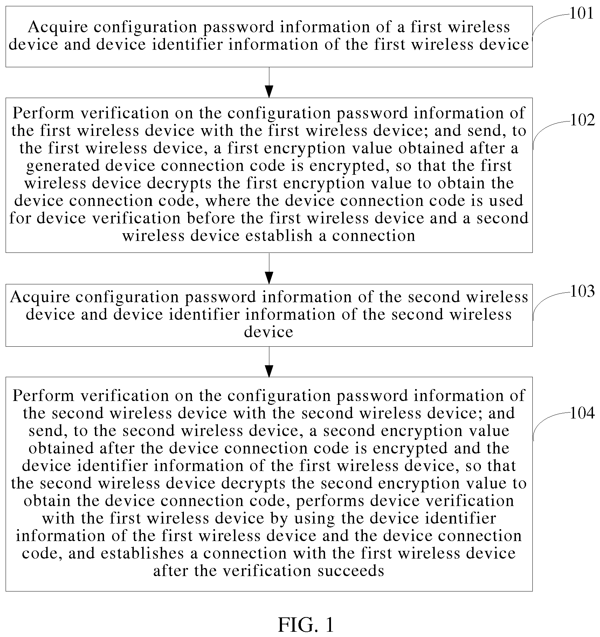

This embodiment of the present invention provides a method for establishing a connection between devices, as shown in FIG. 1, the method is executed by a configuration device, and the method includes:
101. Acquire configuration password information of a first wireless device and device identifier information of the first wireless device.

The configuration device may acquire the configuration password information of the first wireless device in a manner of scanning a multi-dimensional code.

The multi-dimensional code is a static multi-dimensional code, for example, a multi-dimensional code printed on a label.

The multi-dimensional code may also be a dynamic multi-dimensional code dynamically generated by the first wireless device, and the multi-dimensional code includes the configuration password information of the first wireless device and/or the device identifier information of the first wireless device.

Specifically, the multi-dimensional code is any one-dimensional barcode or two-dimensional barcode that can be identified, or more barcode symbologies that can be technically implemented, for example, a universal product code (Universal Product Code, UPC), and a quick response code (Quick Response Code, QR Code). Optionally, the configuration device may acquire the configuration password information of the first wireless device in a manner of acquiring a PIN code of the first wireless device.

The PIN code may be statically printed on a label, or may be displayed on a UI of the first wireless device after the PIN is dynamically generated by the first wireless device.

Optionally, the configuration device may acquire the configuration password information of the first wireless device in a PBC manner.

Specifically, configuration buttons of the configuration device and the first wireless device are pressed at the same time. In this manner, the configuration device and the first wireless device may learn that the configuration password information of the first wireless device is PIN = a default value (which is 00000000 in a standard).

Optionally, the configuration device may acquire the configuration password information of the first wireless device in a short-range low-power wireless signal manner.

Specifically, the short-range low-power wireless signal manner may be an NFC manner, a low-power Bluetooth (Bluetooth) manner, a low-power Wi-Fi manner, or the like.

The configuration device further needs to acquire the device identifier information of the first wireless device.

The configuration device may acquire the device identifier information in any one of the following manners: scanning a multi-dimensional code of the first wireless device; or receiving a configuration indication message sent by the first wireless device, where the configuration indication message includes the device identifier information of the first wireless device.

The multi-dimensional code includes the configuration password information of the first wireless device and/or the device identifier information of the first wireless device. When the multi-dimensional code includes the device identifier information of the first wireless device, the configuration device may acquire the device identifier information of the first wireless device by scanning the multi-dimensional code of the first wireless device.

Specifically, the configuration indication message may be a probe request (probe response) frame or a beacon (beacon) frame.

102. Perform verification on the configuration password information of the first wireless device with the first wireless device; and send, to the first wireless device, a first encryption value obtained after a generated device connection code is encrypted, so that the first wireless device decrypts the first encryption value to obtain the device connection code, where the device connection code is used for device verification before the first wireless device and a second wireless device establish a connection.

A person skilled in the art knows that, after the configuration device acquires the configuration password information of the first wireless device, authentication and association need to be first performed between the configuration device and the first wireless device; after the authentication and association are complete, the configuration device and the first wireless device may verify the device by performing verification on the configuration password information of the first wireless device, so as to ensure communication security and prevent a spoofing attack.

In a process of performing verification on the configuration password information with the first wireless device, the configuration device may send, to the first wireless device, the first encryption value obtained after the generated device connection code is encrypted; after the verification performed by the configuration device with the first wireless device succeeds, the first wireless device may decrypt the first encryption value to obtain the device connection code.

Optionally, after the verification performed by the configuration device with the first wireless device succeeds, the configuration device may send, to the first wireless device, the first encryption value obtained after the generated device connection code is encrypted. After obtaining the first encryption value, the first wireless device decrypts the first encryption value and can obtain the device connection code. Specifically, the device connection code is used for verifying, when the second wireless device and the first wireless device perform Wireless Fidelity protected setup WPS, whether both the first wireless device and the second wireless device have the device connection code; after the verification succeeds, the second wireless device receives a credential sent by the first wireless device, or the second wireless device sends a credential to the first wireless device; the second wireless device and the first wireless device perform a 4-way handshake by using the credential; and the second wireless device and the first wireless device establish a connection after the handshake succeeds.

Certainly, the device connection code may further be used for verifying, when the second wireless device and the first wireless device perform a 4-way handshake by using the device connection code as a pre-shared key, whether both the first wireless device and the second wireless device have the device connection code; and after the verification succeeds, the second wireless device and the first wireless device establish a connection, and the second wireless device and the first wireless device perform data communication.

Specifically, the device connection code is a key that is of a specific format and is generated by the configuration device according to a certain rule, for example, the device connection code may be a 128-bit or 256-bit number.

103. Acquire configuration password information of the second wireless device and device identifier information of the second wireless device.

For a method for acquiring the configuration password information of the second wireless device and the device identifier information of the second wireless device by the configuration device, reference may be made to the foregoing method for acquiring the configuration password information of the first wireless device and the device identifier information of the first wireless device by the configuration device. The two methods of acquiring configuration password information and device identifier information may be the same or may be different, which is not limited in this embodiment of the present invention.

It should be noted that a manner that may be used by the configuration device to acquire the configuration password information of the first wireless device and the device identifier information of the first wireless device, and a manner that may be used by the configuration device to acquire the configuration password information of the second wireless device and the device identifier information of the second wireless device may be the same (for the manners that may be used, reference may be made to the foregoing multiple methods for acquiring the configuration password information of the first wireless device and the device identifier information of the first wireless device by the configuration device); however, the two manners are processes independent from each other. For example, the configuration device may acquire the configuration password information of the first wireless device and the device identifier information of the first wireless device in a manner of scanning the multi-dimensional code of the first wireless device; acquire the configuration password information of the second wireless device in a push button configuration manner; and acquire the device identifier information of the second wireless device by scanning a multi-dimensional code of the second wireless device.

104. Perform verification on the configuration password information of the second wireless device with the second wireless device; and send, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

A person skilled in the art knows that, after the configuration device acquires the configuration password information of the second wireless device, authentication and association need to be first performed between the configuration device and the second wireless device; after the authentication and association are complete, the configuration device and the second wireless device may perform verification on the configuration password information of the second wireless device so as to ensure communication security and prevent a spoofing attack.

In a process of performing verification on the configuration password information with the second wireless device, the configuration device may send, to the second wireless device, the second encryption value obtained after the generated device connection code is encrypted; after the verification performed by the configuration device with the second wireless device succeeds, the second wireless device may decrypt the second encryption value to obtain the device connection code.

Optionally, after the verification performed by the configuration device with the second wireless device succeeds, the configuration device may send, to the second wireless device, the second encryption value obtained after the generated device connection code is encrypted. After obtaining the second encryption value, the second wireless device decrypts the second encryption value and can obtain the device connection code.

After the second wireless device obtains the device connection code and the device identifier information of the first wireless device and, the second wireless device may use the device connection code to perform secure connection with the first wireless device indicated by the device identifier information of the first wireless device.

It should be noted that the configuration device may send, to the second wireless device by using one message, the second encryption value obtained after the device connection code is encrypted and the device identifier information of the first wireless device. Certainly, the configuration device may separately send, to the second wireless device by using two messages, the second encryption value obtained after the device connection code is encrypted and the device identifier information of the first wireless device. Another sending method may also be used, which is not limited in this embodiment of the present invention.

This embodiment of the present invention provides a method for establishing a connection between devices. Configuration password information of a first wireless device and device identifier information of the first wireless device are acquired; verification on the configuration password information of the first wireless device is performed with the first wireless device, and a first encryption value obtained after a generated device connection code is encrypted is sent to the first wireless device, so that the first wireless device decrypts the first encryption value to obtain the device connection code, where the device connection code is used for device verification before the first wireless device and a second wireless device establish a connection; configuration password information of the second wireless device and device identifier information of the second wireless device are acquired; and verification on the configuration password information of the second wireless device is performed with the second wireless device, and a second encryption value obtained after the device connection code is encrypted and the device identifier information of the first wireless device are sent to the second wireless device, so that the second wireless device decrypts the second encryption value to obtain the device connection code, performs device verification with the first wireless device by using the device identifier information of the first wireless device and the device connection code, and establishes a connection with the first wireless device after the verification succeeds. According to the solution, after verification performed between a configuration device and a first wireless device succeeds, the first wireless device may obtain a device connection code sent by the configuration device, and then after verification performed between the configuration device and a second wireless device succeeds, the second wireless device may obtain the device connection code sent by the configuration device. In this way, after obtaining device identifier information of the first wireless device and the device connection code, the second wireless device may use the device connection code to perform secure connection with the first wireless device indicated by the device identifier information of the first wireless device. The first wireless device and the second wireless device do not need to support multiple WPS configuration manners, and the first wireless device and the second wireless device can perform simple and secure connection as long as the configuration device can acquire configuration password information of the first wireless device and the second wireless device, which improves user experience.

### Embodiment 2

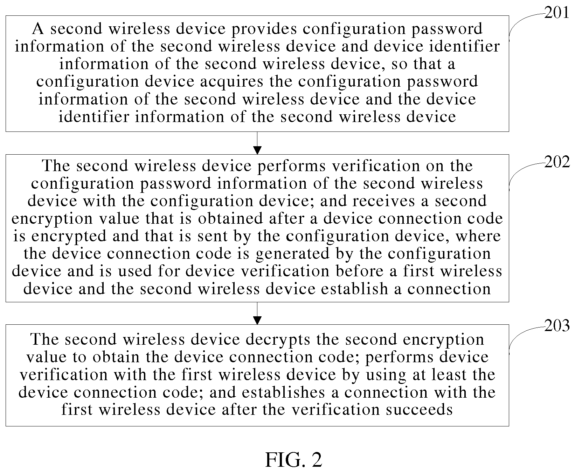

This embodiment of the present invention provides a method for establishing a connection between devices, where the method is executed by a second wireless device. As shown in FIG. 2, the method includes:
201. A second wireless device provides configuration password information of the second wireless device and device identifier information of the second wireless device, so that a configuration device acquires the configuration password information of the second wireless device and the device identifier information of the second wireless device.

Specifically, the second wireless device may provide the configuration password information of the second wireless device in any one of the following manners, so that the configuration device acquires the configuration password information of the second wireless device: providing a multi-dimensional code of the second wireless device for the configuration device; or providing a PIN of the second wireless device for the configuration device; or sending a short-range low-power wireless signal to the configuration device, where the short-range low-power wireless signal includes the configuration password information of the second wireless device; or obtaining the configuration password information of the second wireless device by using push button configuration.

The short-range low-power wireless signal specifically includes a Near Field Communication NFC wireless signal, a low-power Bluetooth wireless signal, or a low-power Wireless Fidelity Wi-Fi signal.

That the second wireless device provides the device identifier information of the second wireless device, so that the configuration device acquires the device identifier information of the second wireless device is specifically implemented in any one of the following manners: providing the multi-dimensional code of the second wireless device for the configuration device; or sending a configuration indication message to the configuration device, where the configuration indication message includes the device identifier information of the second wireless device.

The multi-dimensional code is a static multi-dimensional code, or a dynamic multi-dimensional code dynamically generated by the second wireless device, where the multi-dimensional code includes the configuration password information of the second wireless device and/or the device identifier information of the second wireless device.

Specifically, the configuration indication message may be a probe request (probe response) frame or a beacon (beacon) frame.

202. The second wireless device performs verification on the configuration password information of the second wireless device with the configuration device; and receives a second encryption value that is obtained after a device connection code is encrypted and that is sent by the configuration device, where the device connection code is generated by the configuration device and is used for device verification before the first wireless device and the second wireless device establish a connection.

203. The second wireless device decrypts the second encryption value to obtain the device connection code; performs device verification with the first wireless device by using at least the device connection code; and establishes a connection with the first wireless device after the verification succeeds.

It should be noted that first and second in this embodiment are just for distinguishing, and the first and the second may correspond to first and second or second and first in Embodiment 1, which can be similarly understood in other embodiments. Specifically, when the first and the second correspond to the first and the second in Embodiment 1, the method further includes: The second wireless device receives device identifier information of the first wireless device sent by the configuration device. That the second wireless device decrypts the second encryption value to obtain the device connection code; performs device verification with the first wireless device by using at least the device connection code; and establishes a connection with the first wireless device after the verification succeeds specifically includes: The second wireless device decrypts the second encryption value to obtain the device connection code; performs device verification with the first wireless device by using the device connection code and the device identifier information of the first wireless device; and establishes a connection with the first wireless device after the verification succeeds.

When the first and the first correspond to the second and the first in the Embodiment 1, the first wireless device corresponds to the second wireless device, the second wireless device corresponds to the first wireless device, and the second encryption value corresponds to the first encryption value. That the second wireless device decrypts the second encryption value to obtain the device connection code; performs device verification with the first wireless device by using at least the device connection code; and establishes a connection with the first wireless device after the verification succeeds specifically includes: The second wireless device decrypts the second encryption value to obtain the device connection code; performs device verification with the first wireless device by using the device connection code; and establishes a connection with the first wireless device after the verification succeeds.

This embodiment of the present invention provides a method for establishing a connection between devices. A second wireless device provides configuration password information of the second wireless device and device identifier information of the second wireless device, so that the configuration device acquires the configuration password information of the second wireless device and the device identifier information of the second wireless device; the second wireless device performs verification on the configuration password information of the second wireless device with the configuration device, and receives a second encryption value that is obtained after a device connection code is encrypted and that is sent by the configuration device, where the device connection code is generated by the configuration device and is used for device verification before the first wireless device and the second wireless device establish a connection; and the second wireless device decrypts the second encryption value to obtain the device connection code, performs device verification with the first wireless device by using at least the device connection code, and establishes a connection with the first wireless device after the verification succeeds.

According to the solution, after verification performed between a configuration device and a second wireless device succeeds, the second wireless device may obtain a device connection code sent by the configuration device, so that the second wireless device may use at least the device connection code to perform secure connection with a first wireless device indicated by device identifier information of the first wireless device. The first wireless device and the second wireless device do not need to support multiple WPS configuration manners, and the first wireless device and the second wireless device can perform simple and secure connection as long as the configuration device can acquire configuration password information of the first wireless device and the second wireless device, which improves user experience.

### Embodiment 3

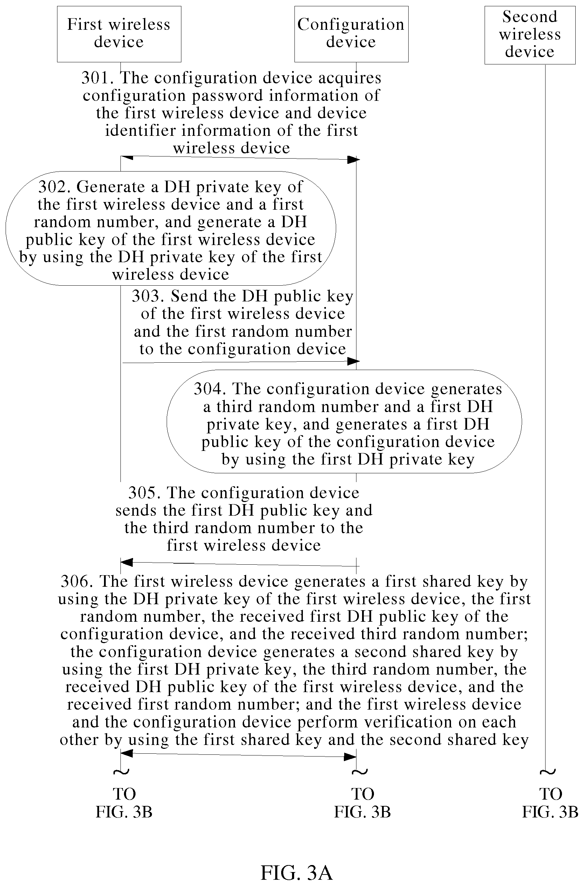

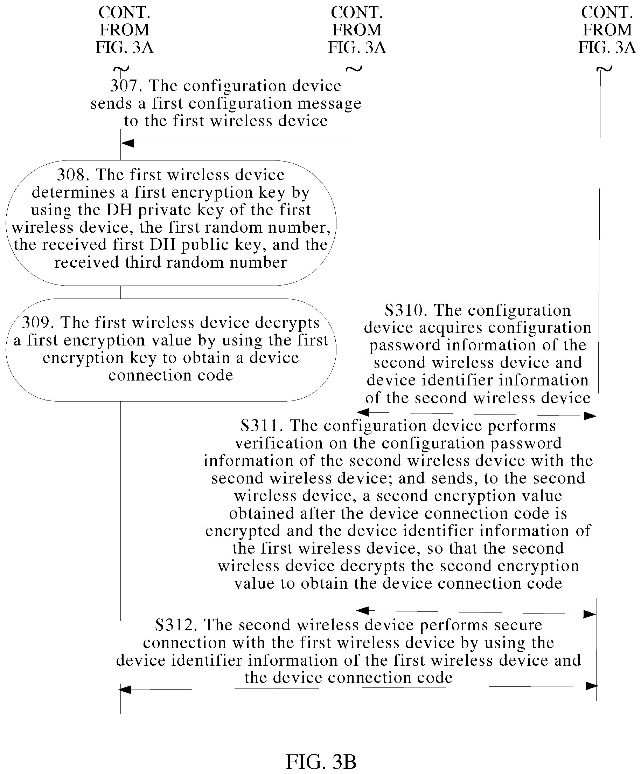

This embodiment of the present invention provides a method for establishing a connection between devices. M1-M8 EAP authentication messages of a registration protocol (Registration Protocol) in the WPS 2.0 protocol are used to perform verification on configuration password information of a first wireless device and implement sending of a configuration message including the device connection code to the first wireless device from the configuration device. As shown in FIG. 3A and FIG. 3B, the method includes:
301. A configuration device acquires configuration password information of a first wireless device and device identifier information of the first wireless device.
   For a specific method for acquiring the configuration password information of the first wireless device and the device identifier information of the first wireless device by the configuration device, reference may be made to descriptions in the foregoing embodiments of the present invention, and details are not described herein again.
302. The first wireless device generates a DH private key of the first wireless device and a first random number, and generates a DH public key of the first wireless device by using the DH private key of the first wireless device.
303. The first wireless device sends the DH public key of the first wireless device and the first random number to the configuration device.
   Specifically, the first wireless device may send the Diffie-Hellman key exchange (Diffie-Hellman key exchange, DH) public key and the first random number to the configuration device by using the M1 message of the registration protocol in the WPS 2.0 protocol.
304. The configuration device generates a third random number and a first DH private key, and generates a first DH public key of the configuration device by using the first DH private key.
305. The configuration device sends the first DH public key and the third random number to the first wireless device.
   Specifically, the configuration device may send the first DH public key and the third random number to the first wireless device by using the M2 message of the registration protocol in the WPS 2.0 protocol.
306. The first wireless device generates a first shared key by using the DH private key of the first wireless device, the first random number, the received first DH public key of the configuration device, and the received third random number; the configuration device generates a second shared key by using the first DH private key, the third random number, the received DH public key of the first wireless device, and the received first random number; and the first wireless device and the configuration device perform verification on each other by using the first shared key and the second shared key.
   The first wireless device and the configuration device may determine whether the verification succeeds by comparing the first shared key and the second shared key.
   A person skilled in the art may understand that, in a case in which third-party malicious masquerading does not exist, the first shared key is equal to the second shared key, and the verification performed by the first wireless device and the configuration device succeeds; in a case in which third-party malicious masquerading exists, the first shared key is not equal to the second shared key, and the verification fails.
   Specifically, the first wireless device may first generate a DHkey by using the DH private key of the first wireless device and the received first DH public key of the configuration device, and then generate the first shared key by using the DHkey, the first random number, and the third random number. Similarly, the configuration device may first generate a DHkey by using the first DH private key and the received public key of the first wireless device, and then generate the second shared key by using the DHkey, the first random number, and the third random number.
   A process in which the first wireless device and the configuration device generate a DHkey by using the corresponding DH private key of itself and the corresponding DH public key of the other part may comply with the Diffie-Hellman algorithm, and details are not described in this embodiment of the present invention.
   It should be noted that a person skilled in the art may understand that the first shared key and the second shared key may be obtained in any other feasible manners, and the foregoing description is used as an example in the present invention for description; however, a specific implementation manner is not limited in the present invention. Optionally, when the first shared key is equal to the second shared key, both the first shared key and the second shared key are referred to as a shared key. The first wireless device and the configuration device may encrypt a verification message and verification information between the first wireless device and the configuration device by using the shared key or a derived key of the shared key, where an encryption manner is specified in the WPS 2.0 protocol, and details are not described again in the present invention.
   Specifically, the first wireless device and the configuration device perform verification by using the M3-M7 messages, where a verification manner is specified in the WPS 2.0 protocol, and details are not described again in the present invention.
307. The configuration device sends a first configuration message to the first wireless device.
   The first configuration message specifically includes a first encryption value obtained after a generated device connection code is encrypted by using a first private key. Specifically, the first configuration message may be the M8 message of the registration protocol in the WPS 2.0 protocol and is used to send configuration information including the device connection code to the first wireless device.
   The first private key may be the second shared key or a derived key of the second shared key generated by using the first DH private key, the DH public key of the first wireless device, the first random number, and the third random number.
   Specifically, the configuration device generates a DHkey by using the DH public key of the first wireless device and the first DH private key, and then generates a KDK by using the DHkey, the first random number, and the third random number, where the first private key and a second private key are derived from the KDK. It should be noted that the first private key and the second private key are two keys independent from each other and have no deduction or derivation relationship. The first private key is used to encrypt the device connection code, and the second private key is used to encrypt the first configuration message. Then the configuration device encrypts the generated device connection code by using the first private key to obtain the first encryption value.
   Specifically, the first private key may be a key protection key (KeyWrapKey) in the WPS 2.0 protocol, and the second private key may be a message authentication key (Authkey) of the registration protocol in the WPS 2.0 protocol.
   Optionally, the configuration device generates a DHkey by using the received DH public key of the first wireless device and the first DH private key, and then generates a KDK by using the DHkey, the first random number, and the third random number, where the first private key and an authentication key are derived from the KDK. It should be noted that the first private key and the authentication key are two keys independent from each other and have no deduction or derivation relationship. The first private key is used to encrypt the device connection code, and the authentication key is used to encrypt the first configuration message. Then, the configuration device encrypts the generated device connection code by using the first private key to obtain the first encryption value, and encrypts the first encryption value by using the authentication key.
   Specifically, the first private key may be a key protection key (KeyWrapKey), and the authentication key may be a message authentication key (Authkey) of the registration protocol.
   Specifically, the configuration device encrypts the generated device connection code by using the first private key and a first encryption algorithm to obtain the first encryption value, and encrypts the first encryption value by using the authentication key and a second encryption algorithm. The first encryption algorithm and the second encryption algorithm may be an Advanced Encryption Standard (Advanced Encryption Standard, AES) algorithm in a symmetric encryption algorithm.
308. The first wireless device determines a first encryption key by using the DH private key of the first wireless device, the first random number, the received first DH public key, and the received third random number.
   Specifically, the first wireless device generates a DHkey by using the DH private key of the first wireless device and the received first DH public key, and then generates a KDK by using the DHkey, the first random number, and the third random number, where the first encryption key is derived from the KDK.
309. The first wireless device decrypts the first encryption value by using the first encryption key to obtain the device connection code.
S310. The configuration device acquires configuration password information of the second wireless device and device identifier information of the second wireless device.
S311. The configuration device performs verification on the configuration password information of the second wireless device with the second wireless device; and sends, to the second wireless device, a second encryption value obtained after the device connection code is encrypted and the device identifier information of the first wireless device, so that the second wireless device decrypts the second encryption value to obtain the device connection code.
   Specifically, the configuration device may send, to the second wireless device by using one message, the second encryption value obtained after the device connection code is encrypted and the device identifier information of the first wireless device. Certainly, the configuration device may separately send, to the second wireless device by using two messages, the second encryption value obtained after the device connection code is encrypted and the device identifier information of the first wireless device.
   It should be noted that when the configuration device separately sends, to the second wireless device by using two messages, the second encryption value obtained after the device connection code is encrypted and the device identifier information of the first wireless device, time sequences for the configuration device to send the device identifier information of the first wireless device to the second wireless device; to acquire the configuration password information of the second wireless device and the device identifier information of the second wireless device; and to perform verification on the configuration password information of the second wireless device with the second wireless device, and send, to the second wireless device, the second encryption value obtained after the device connection code is encrypted are not limited.
S312. The second wireless device performs secure connection with the first wireless device by using the device identifier information of the first wireless device and the device connection code.

The second wireless device performs Wireless Fidelity protected setup WPS with the first wireless device; verifies whether both the first wireless device and the second wireless device have the device connection code; after the verification succeeds, receives a credential sent by the first wireless device, or sends a credential to the first wireless device; performs a 4-way handshake with the first wireless device by using the credential; and establishes a connection with the first wireless device after the handshake succeeds, and further performs data communication with the first wireless device.

Optionally, the second wireless device performs the 4-way handshake with the first wireless device by using the device connection code as a pre-shared key; verifies whether both the first wireless device and the second wireless device have the device connection code; and after the verification succeeds, establishes a connection with the first wireless device, and further performs data communication with the first wireless device.

It should be noted that in the method shown in FIG. 3A and FIG. 3B, step 302 to step 309 describe a specific implementation process in which the configuration device performs verification on the configuration password information of the first wireless device with the first wireless device, and sends, to the first wireless device, the first encryption value obtained after the generated device connection code is encrypted, so that the first wireless device decrypts the first encryption value to obtain the device connection code.

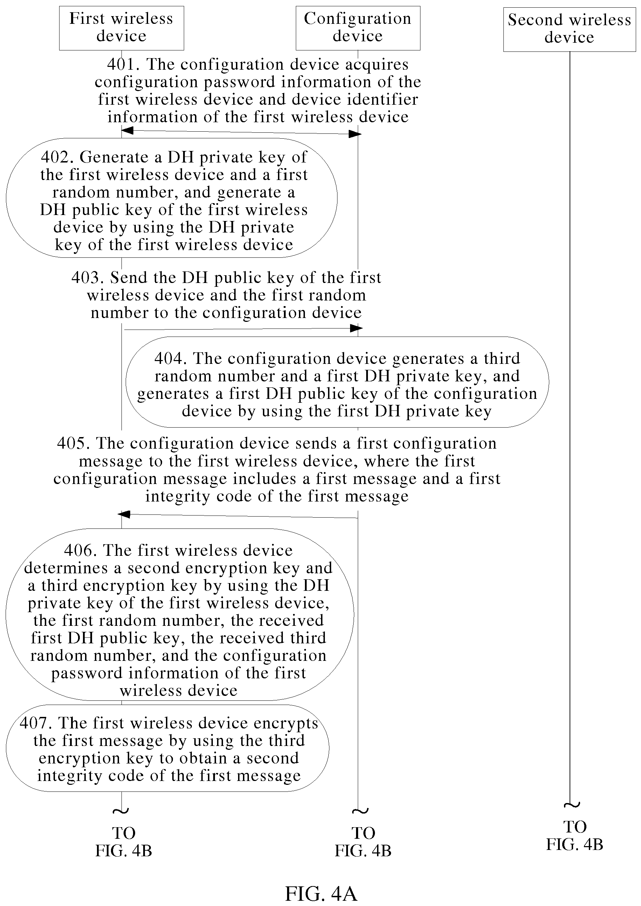

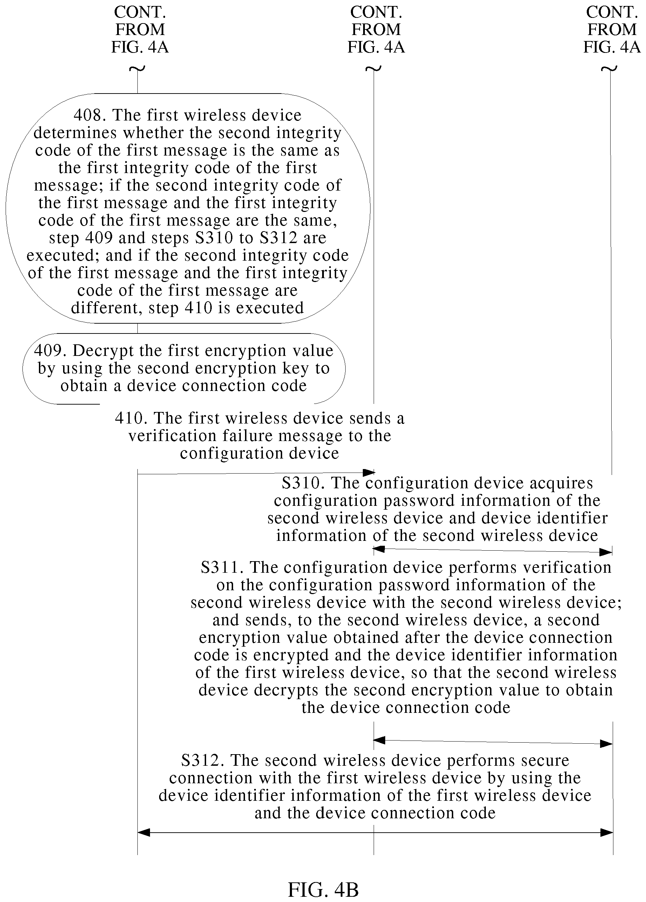

Optionally, as shown in FIG. 4A and FIG. 4B, the method includes:
401. A configuration device acquires configuration password information of a first wireless device and device identifier information of the first wireless device.
   For a specific method for acquiring the configuration password information of the first wireless device and the device identifier information of the first wireless device by the configuration device, reference may be made to descriptions in the foregoing embodiments of the present invention, and details are not described herein again.
402. The first wireless device generates a DH private key of the first wireless device and a first random number, and generates a DH public key of the first wireless device by using the DH private key of the first wireless device.
403. The first wireless device sends the DH public key of the first wireless device and the first random number to the configuration device.
404. The configuration device generates a third random number and a first DH private key, and generates a first DH public key of the configuration device by using the first DH private key.
405. The configuration device sends a first configuration message to the first wireless device, where the first configuration message includes a first message and a first integrity code of the first message.
   The first message includes the first DH public key, the generated third random number, and a first encryption value obtained after a generated device connection code is encrypted by using a second private key; and the first integrity code of the first message is obtained after the first message is encrypted by using a third private key. The second private key and the third private key are determined by using the DH public key of the first wireless device, the first random number, the first DH private key, the third random number, and the configuration password information of the first wireless device.
   Specifically, the configuration device generates a DHkey by using the DH public key of the first wireless device and the first DH private key, and then generates a KDK by using the DHkey, the first random number, the third random number, and the configuration password information of the first wireless device, where a first private key and the third private key are derived from the KDK. It should be noted that the second private key and the third private key are two keys independent from each other and have no deduction or derivation relationship. The second private key is used to encrypt the device connection code, and the third private key is used to encrypt a digest of the first message. Then the configuration device encrypts the generated device connection code by using the second private key to obtain the first encryption value, and encrypts the digest of the first message by using the third private key to obtain the first integrity code of the first message.
   Specifically, the second private key may be a key protection key (KeyWrapKey) in the WPS 2.0 protocol, and the third private key may be a message authentication key (Authkey) of a registration protocol in the WPS 2.0 protocol.
   Specifically, the configuration device encrypts the generated device connection code by using the second private key and a first encryption algorithm to obtain the first encryption value, and encrypts the digest of the first message by using the third private key and a second encryption algorithm. The first encryption algorithm and the second encryption algorithm may be an AES algorithm in a symmetric encryption algorithm. A specific encryption process is a technology well known by a person skilled in the art, and details are not described again in this embodiment of the present invention.
406. The first wireless device determines a second encryption key and a third encryption key by using the DH private key of the first wireless device, the first random number, the received first DH public key, the received third random number, and the configuration password information of the first wireless device.
   Specifically, the first wireless device generates a DHkey by using the DH private key of the first wireless device and the received first DH public key, and then generates a KDK by using the DHkey, the first random number, the third random number, and the configuration password information of the first wireless device, where the second encryption key and the third encryption key are derived from the KDK.
407. The first wireless device encrypts the first message by using the third encryption key to obtain a second integrity code of the first message.
408. The first wireless device determines whether the second integrity code of the first message is the same as the first integrity code of the first message.
   If the second integrity code of the first message and the first integrity code of the first message are the same, step 409 and steps S310 to S312 are executed; and if the second integrity code of the first message and the first integrity code of the first message are different, step 410 is executed.
409. Decrypt the first encryption value by using the second encryption key to obtain the device connection code.
410. The first wireless device sends a verification failure message to the configuration device.

S310. The configuration device acquires configuration password information of the second wireless device and device identifier information of the second wireless device.

S311. The configuration device performs verification on the configuration password information of the second wireless device with the second wireless device; and sends, to the second wireless device, a second encryption value obtained after the device connection code is encrypted and the device identifier information of the first wireless device, so that the second wireless device decrypts the second encryption value to obtain the device connection code.

S312. The second wireless device performs secure connection with the first wireless device by using the device identifier information of the first wireless device and the device connection code.

It should be noted that in the method shown in FIG. 4A and FIG. 4B, step 402 to step 410 describe a specific implementation process in which the configuration device performs verification on the configuration password information of the first wireless device with the first wireless device, and sends, to the first wireless device, the first encryption value obtained after the generated device connection code is encrypted, so that the first wireless device decrypts the first encryption value to obtain the device connection code.

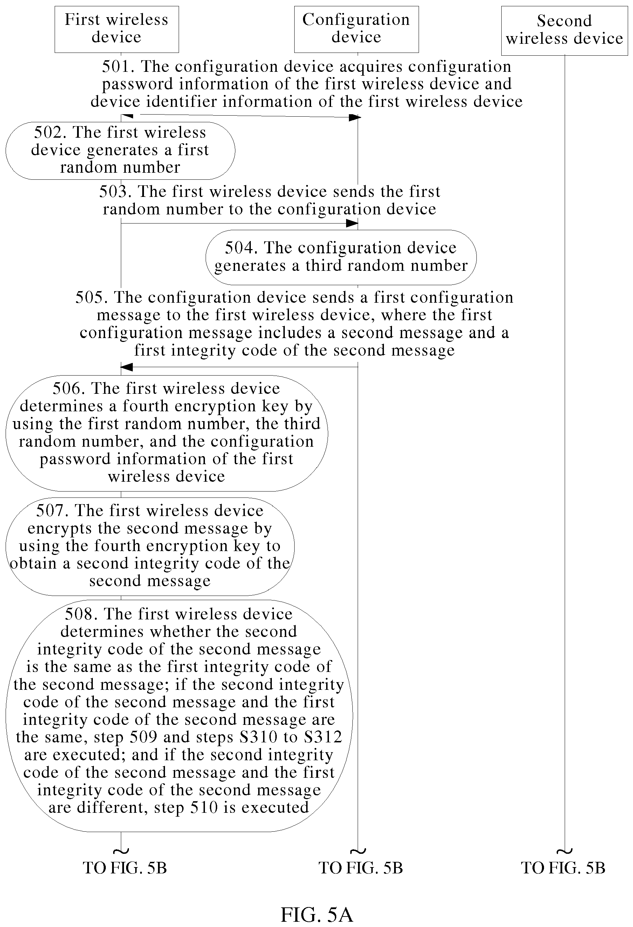

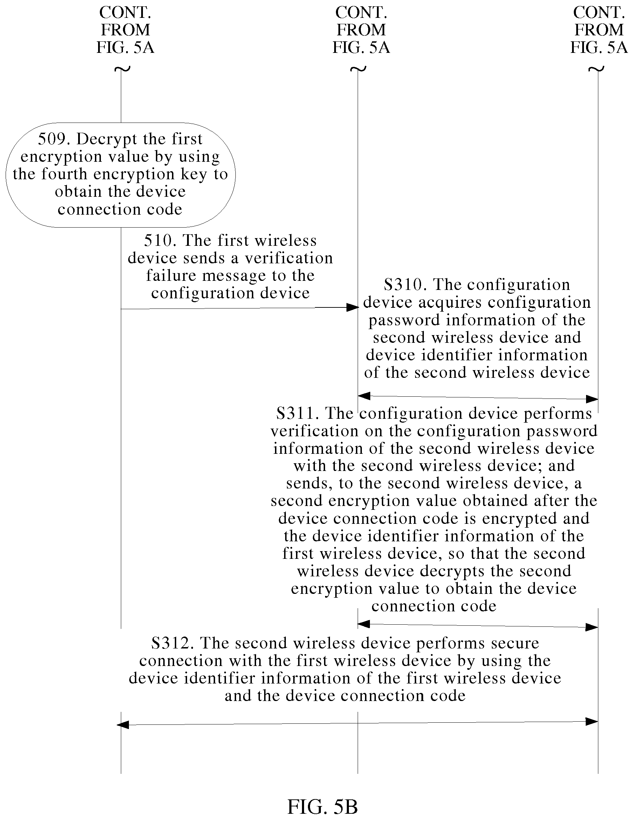

Optionally, as shown in FIG. 5A and FIG. 5B, the method includes:
501. A configuration device acquires configuration password information of a first wireless device and device identifier information of the first wireless device.
   For a specific method for acquiring the configuration password information of the first wireless device and the device identifier information of the first wireless device by the configuration device, reference may be made to descriptions in the foregoing embodiments of the present invention, and details are not described herein again.
502. The first wireless device generates a first random number.
503. The first wireless device sends the first random number to the configuration device.
504. The configuration device generates a third random number.
505. The configuration device sends a first configuration message to the first wireless device, where the first configuration message includes a second message and a first integrity code of the second message.

The second message includes the generated third random number and a first encryption value obtained after a generated device connection code is encrypted by using a fourth private key, where the fourth private key is determined by using the first random number, the generated third random number, and the configuration password information of the first wireless device.

The first integrity code of the second message includes an encryption result obtained after a digest of the second message is encrypted by using the fourth private key.

Specifically, the configuration device generates a private key by using the first random number and the third random number; then, the configuration device generates the fourth private key by using the private key and the configuration password information of the first wireless device, and encrypts the generated device connection code by using the four private key to obtain the first encryption value; and then, the configuration encrypts the digest of the second message by using the four private key to obtain the first integrity code of the second message.

Specifically, the configuration device encrypts the generated device connection code by using the fourth private key and a first encryption algorithm to obtain the first encryption value, and encrypts the first encryption value by using the fourth private key and a second encryption algorithm. The first encryption algorithm and the second encryption algorithm may be an AES algorithm in a symmetric encryption algorithm.
506. The first wireless device determines a fourth encryption key by using the first random number, the third random number, and the configuration password information of the first wireless device.
507. The first wireless device encrypts the second message by using the fourth encryption key to obtain a second integrity code of the second message.
508. The first wireless device determines whether the second integrity code of the second message is the same as the first integrity code of the second message.
   If the second integrity code of the second message and the first integrity code of the second message are the same, step 509 and steps S310 to S312 are executed; and if the second integrity code of the second message and the first integrity code of the second message are different, step 510 is executed.
509. Decrypt the first encryption value by using the fourth encryption key to obtain the device connection code.
510. The first wireless device sends a verification failure message to the configuration device.

S310. The configuration device acquires configuration password information of the second wireless device and device identifier information of the second wireless device.

S311. The configuration device performs verification on the configuration password information of the second wireless device with the second wireless device; and sends, to the second wireless device, a second encryption value obtained after the device connection code is encrypted and the device identifier information of the first wireless device, so that the second wireless device decrypts the second encryption value to obtain the device connection code.

S312. The second wireless device performs secure connection with the first wireless device by using the device identifier information of the first wireless device and the device connection code.

It should be noted that in the method shown in FIG. 5A and FIG. 5B, step 502 to step 510 describe a specific implementation process in which the configuration device performs verification on the configuration password information of the first wireless device with the first wireless device, and sends, to the first wireless device, the first encryption value obtained after the generated device connection code is encrypted, so that the first wireless device decrypts the first encryption value to obtain the device connection code.

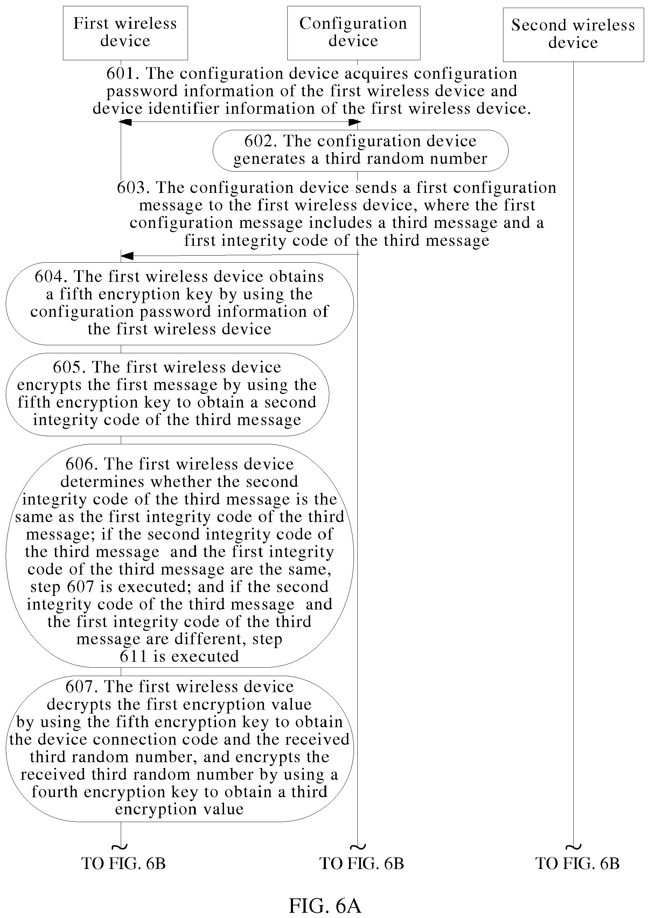

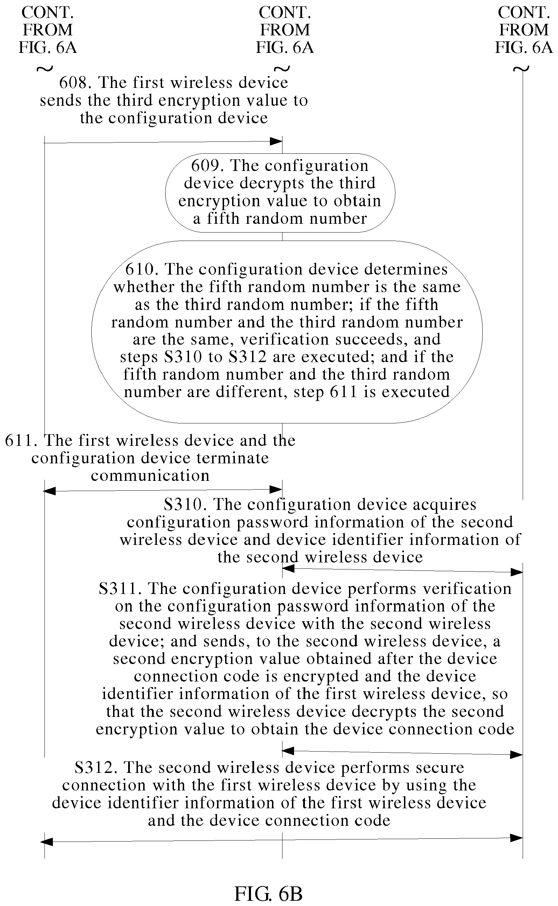

Optionally, as shown in FIG. 6A and FIG. 6B, the method includes:
601. A configuration device acquires configuration password information of a first wireless device and device identifier information of the first wireless device.
   For a specific method for acquiring the configuration password information of the first wireless device and the device identifier information of the first wireless device by the configuration device, reference may be made to descriptions in the foregoing embodiments of the present invention, and details are not described herein again.
602. The configuration device generates a third random number.
603. The configuration device sends a first configuration message to the first wireless device, where the first configuration message includes a third message and a first integrity code of the third message.
   The first message includes a first encryption value obtained after a generated device connection code and the third random number are encrypted by using a fifth private key determined by using the configuration password information of the first wireless device.
   The first integrity code of the third message includes an encryption result obtained after a digest of the third message is encrypted by using the fifth private key.
   Specifically, the configuration device encrypts the generated device connection code and the third random number by using the configuration password information of the first wireless device as the fifth private key to obtain the first encryption value, then, encrypts the digest of the third message by using the fifth private key to obtain the first integrity code of the third message.
   Specifically, the configuration device encrypts the generated device connection code by using the fifth private key and a first encryption algorithm to obtain the first encryption value, and encrypts the first encryption value by using the fifth private key and a second encryption algorithm. The first encryption algorithm and the second encryption algorithm may be an AES algorithm in a symmetric encryption algorithm.
604. The first wireless device obtains a fifth encryption key by using the configuration password information of the first wireless device.
605. The first wireless device encrypts the first message by using the fifth encryption key to obtain a second integrity code of the third message.
606. The first wireless device determines whether the second integrity code of the third message is the same as the first integrity code of the third message.
   If the second integrity code of the third message and the first integrity code of the third message are the same, step 607 is executed; and if the second integrity code of the third message and the first integrity code of the third message are different, step 611 is executed.
607. The first wireless device decrypts the first encryption value by using the fifth encryption key to obtain the device connection code and the received third random number, and encrypts the received third random number by using a fourth encryption key to obtain a third encryption value.
608. The first wireless device sends the third encryption value to the configuration device.
609. The configuration device decrypts the third encryption value to obtain a fifth random number.
610. The configuration device determines whether the fifth random number is the same as the third random number.
   If the fifth random number and the third random number are the same, verification succeeds, and steps S310 to S312 are executed; and if the fifth random number and the third random number are different, step 611 is executed.
611. The first wireless device and the configuration device terminate communication.

S310. The configuration device acquires configuration password information of the second wireless device and device identifier information of the second wireless device.

S311. The configuration device performs verification on the configuration password information of the second wireless device with the second wireless device; and sends, to the second wireless device, a second encryption value obtained after the device connection code is encrypted and the device identifier information of the first wireless device, so that the second wireless device decrypts the second encryption value to obtain the device connection code.

S312. The second wireless device performs secure connection with the first wireless device by using the device identifier information of the first wireless device and the device connection code.

It should be noted that in the method shown in FIG. 6A and FIG. 6B, step 602 to step 612 describe a specific implementation process in which the configuration device performs verification on the configuration password information of the first wireless device with the first wireless device, and sends, to the first wireless device, the first encryption value obtained after the generated device connection code is encrypted, so that the first wireless device decrypts the first encryption value to obtain the device connection code.

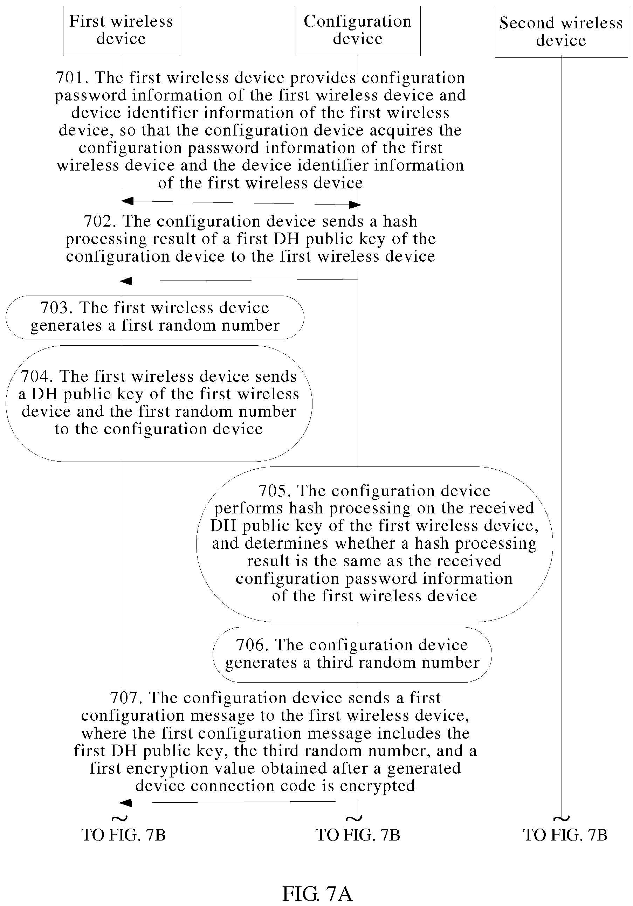

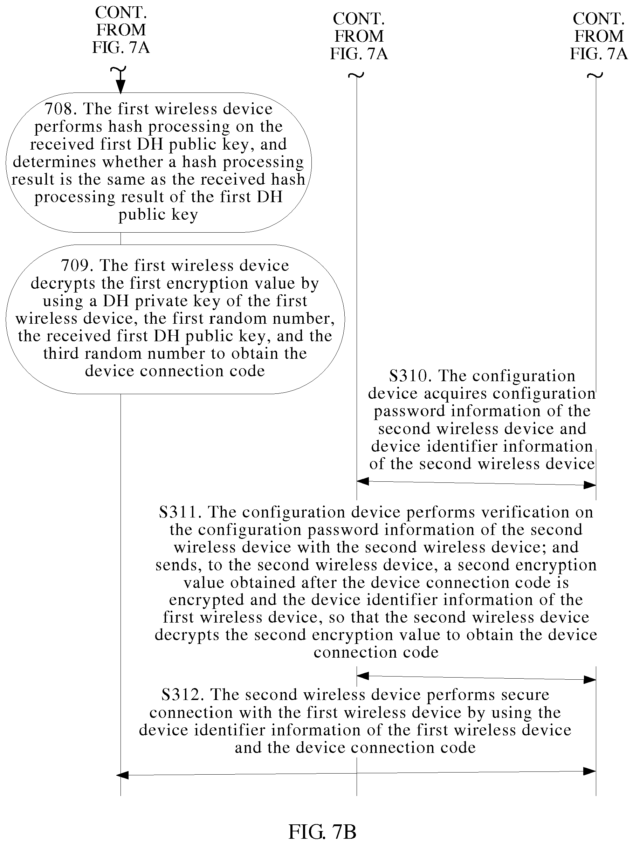

Optionally, as shown in FIG. 7A and FIG. 7B, the method includes:
701. A first wireless device provides configuration password information of the first wireless device and device identifier information of the first wireless device, so that the configuration device acquires the configuration password information of the first wireless device and the device identifier information of the first wireless device. Specifically, the configuration device acquires the configuration password information of the first wireless device in a manner of reading an NFC tag of the first wireless device.
   A person skilled in the art may understand that the configuration password information of the first wireless device is first 160 bits of a hash of a DH public key of the first wireless device generated by the first wireless device by using a generated DH private key of the first wireless device.
   The hash processing is hash conversion performed by using a hash algorithm, where the hash algorithm may be SHA256, or the like.
702. The configuration device sends a hash processing result of a first DH public key of the configuration device to the first wireless device.
   Specifically, after generating a first DH private key, the configuration device generates the first DH public key by using the first DH private key, and uses first 160 bits of a hash of the first DH public key as the hash processing result of the first DH public key.
   The hash processing is the same as step 701.
703. The first wireless device generates a first random number.
704. The first wireless device sends a DH public key of the first wireless device and the first random number to the configuration device.
705. The configuration device performs hash processing on the received DH public key of the first wireless device, and determines whether a hash processing result is the same as the received configuration password information of the first wireless device. The hash processing is hash conversion performed by using a hash algorithm, where the hash algorithm may be SHA256, or the like.
   If the hash processing result and the received configuration password information of the first wireless device are the same, verification succeeds, and step 706 is executed; and if the hash processing result and the received configuration password information of the first wireless device are different, verification fails.
706. The configuration device generates a third random number.
707. The configuration device sends a first configuration message to the first wireless device, where the first configuration message includes the first DH public key, the third random number, and a first encryption value obtained after a generated device connection code is encrypted.
   The configuration device encrypts the device connection code by using a first private key to obtain the first encryption value.
   The first private key may be a second shared key generated by using the first DH private key, the DH public key of the first wireless device, the first random number, and the third random number, or a derived key of the second shared key.
   For a specific encryption method, reference may be made to description in step 307 in this embodiment of the present invention, and details are not described in this embodiment of the present invention.
708. The first wireless device performs hash processing on the received first DH public key, and determines whether a hash processing result is the same as the received hash processing result of the first DH public key.
   The first wireless device performs hash processing on the received first DH public key, where the hash processing is the same as the hash processing in step 705.
   If the hash processing result and the received hash processing result of the first DH public key are the same, verification succeeds; and if the hash processing result and the received hash processing result of the first DH public key are different, verification fails.
709. The first wireless device decrypts the first encryption value by using a first encryption value determined by using a DH private key of the first wireless device, the first random number, the received first DH public key, and the third random number, to obtain the device connection code.

For a specific process, reference may be made to steps 308 and 309 in this embodiment of the present invention, and details are not described again in this embodiment of the present invention.

S310. The configuration device acquires configuration password information of the second wireless device and device identifier information of the second wireless device.

S311. The configuration device performs verification on the configuration password information of the second wireless device with the second wireless device; and sends, to the second wireless device, a second encryption value obtained after the device connection code is encrypted and the device identifier information of the first wireless device, so that the second wireless device decrypts the second encryption value to obtain the device connection code.

S312. The second wireless device performs secure connection with the first wireless device by using the device identifier information of the first wireless device and the device connection code.

It should be noted that in the method shown in FIG. 7A and FIG. 7B, step 702 to step 709 describe a specific implementation process in which the configuration device performs verification on the configuration password information of the first wireless device with the first wireless device, and sends, to the first wireless device, the first encryption value obtained after the generated device connection code is encrypted, so that the first wireless device decrypts the first encryption value to obtain the device connection code.

In the foregoing process, that a public/private key algorithm is a DH algorithm is used for description. A person skilled in the art may understand that a public/private key algorithm is a common encryption algorithm. A basic idea of this algorithm is that: A private key is used to generate a public key, the public key may be public, a user equipment must keep the private key, and a packet encrypted by using a public key can only decrypted by using a private key. The public/private key algorithm may also be another public/private key algorithm, for example, the Ron Rivest-Adi Shamir -Leonard Adleman (Ron Rivest-Adi Shamir -Leonard Adleman, RSA) algorithm, or the EIGamal algorithm.

It should be noted that, for a specific implementation manner of the step S310 in each of the foregoing embodiments, reference may be made to the method for requiring the configuration password information of the first wireless device and the device identifier information of the first wireless device by the configuration device in Embodiment 1, and details are not described herein again. A specific implementation manner in which the configuration device performs verification on the configuration password information of the second wireless device with the second wireless device; and sends, to the second wireless device, the second encryption value obtained after the device connection code is encrypted and the device identifier information of the first wireless device, so that the second wireless device decrypts the second encryption value to obtain the device connection code in the step S311 in each of the foregoing embodiments may be any manner in which the configuration device performs verification on the configuration password information of the first wireless device with the first wireless device, and sends, to the first wireless device, the first encryption value obtained after the device connection code is encrypted, so that the first wireless device decrypts the first encryption value to obtain the device connection code in the foregoing FIG. 3A and FIG. 3B, FIG. 4A and FIG. 4B, FIG. 5A and FIG. 5B, FIG. 6A and FIG. 6B, or FIG. 7A and FIG. 7B.

This embodiment of the present invention provides a method for establishing a connection between devices. Configuration password information of a first wireless device and device identifier information of the first wireless device are acquired; verification on the configuration password information of the first wireless device is performed with the first wireless device, and a first encryption value obtained after a generated device connection code is encrypted is sent to the first wireless device, so that the first wireless device decrypts the first encryption value to obtain the device connection code, where the device connection code is used for device verification before the first wireless device and a second wireless device establish a connection; configuration password information of the second wireless device and device identifier information of the second wireless device are acquired; and verification on the configuration password information of the second wireless device is performed with the second wireless device, and a second encryption value obtained after the device connection code is encrypted and the device identifier information of the first wireless device are sent to the second wireless device, so that the second wireless device decrypts the second encryption value to obtain the device connection code, performs device verification with the first wireless device by using the device identifier information of the first wireless device and the device connection code, and establishes a connection with the first wireless device after the verification succeeds. According to the solution, after verification performed between a configuration device and a first wireless device succeeds, the first wireless device may obtain a device connection code sent by the configuration device, and then after verification performed between the configuration device and a second wireless device succeeds, the second wireless device may obtain the device connection code sent by the configuration device. In this way, after obtaining device identifier information of the first wireless device and the device connection code, the second wireless device may use the device connection code to perform secure connection with the first wireless device indicated by the device identifier information of the first wireless device. The first wireless device and the second wireless device do not need to support multiple WPS configuration manners, and the first wireless device and the second wireless device can perform simple and secure connection as long as the configuration device can acquire configuration password information of the first wireless device and the second wireless device, which improves user experience.

### Embodiment 4

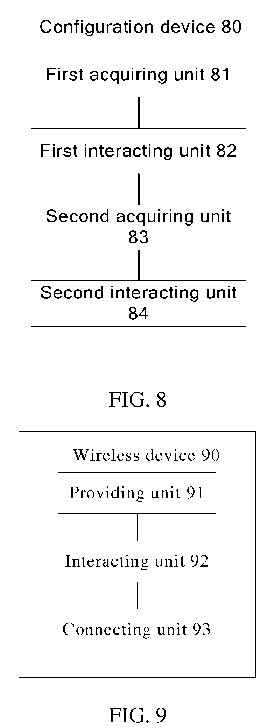

This embodiment of the present invention provides a configuration device. As shown in FIG. 8, the configuration device 80 includes a first acquiring unit 81, a first interacting unit 82, a second acquiring unit 83, and a second interacting unit 84, where
the first acquiring unit 81 is configured to acquire configuration password information of a first wireless device and device identifier information of the first wireless device;
the first interacting unit 82 is configured to: perform verification on the configuration password information of the first wireless device with the first wireless device; and send, to the first wireless device, a first encryption value obtained after a generated device connection code is encrypted, so that the first wireless device decrypts the first encryption value to obtain the device connection code, where the device connection code is used for device verification before the first wireless device and a second wireless device establish a connection;
the second acquiring unit 83 is configured to acquire configuration password information of the second wireless device and device identifier information of the second wireless device; and
the second interacting unit 84 is configured to: perform verification on the configuration password information of the second wireless device with the second wireless device; and send, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

That the first acquiring unit 81/the second acquiring unit 83 acquires the configuration password information of the first/second wireless device is specifically implemented in any one of the following manners: scanning a multi-dimensional code of the first/second wireless device; or acquiring a personal identification number PIN of the first/second wireless device; or receiving a short-range low-power wireless signal sent by the first/second wireless device, where the short-range low-power wireless signal includes the configuration password information of the first/second wireless device; or acquiring the configuration password information of the first/second wireless device by using push button configuration.

The short-range low-power wireless signal specifically includes a Near Field Communication NFC wireless signal, a low-power Bluetooth wireless signal, or a low-power Wireless Fidelity Wi-Fi signal.

The first acquiring unit 81/the second acquiring unit 83 is further specifically configured to: scan the multi-dimensional code of the first/second wireless device; or receive a configuration indication message sent by the first/second wireless device, where the configuration indication message includes the device identifier information of the first/second wireless device.

The multi-dimensional code is a static multi-dimensional code, or a dynamic multi-dimensional code dynamically generated by the first/second wireless device, where the multi-dimensional code includes the configuration password information of the first/second wireless device and/or the device identifier information of the first/second wireless device.

The device connection code is specifically used for verifying, when the second wireless device and the first wireless device perform Wireless Fidelity protected setup WPS, whether both the first wireless device and the second wireless device have the device connection code; after the verification succeeds, the second wireless device receives a credential sent by the first wireless device, or the second wireless device sends a credential to the first wireless device; the second wireless device and the first wireless device perform a 4-way handshake by using the credential; and the second wireless device and the first wireless device establish a connection after the handshake succeeds;
or
verifying, when the second wireless device and the first wireless device perform a 4-way handshake by using the device connection code as a pre-shared key, whether both the first wireless device and the second wireless device have the device connection code; and the second wireless device and the first wireless device establish a connection after the verification succeeds.

This embodiment of the present invention provides a configuration device. The first acquiring unit acquires configuration password information of a first wireless device and device identifier information of the first wireless device. The first interacting unit performs verification on the configuration password information of the first wireless device with the first wireless device; and sends, to the first wireless device, a first encryption value obtained after a generated device connection code is encrypted, so that the first wireless device decrypts the first encryption value to obtain the device connection code, where the device connection code is used for device verification before the first wireless device and a second wireless device establish a connection. The second acquiring unit acquires configuration password information of the second wireless device and device identifier information of the second wireless device. The second interacting unit performs verification on the configuration password information of the second wireless device with the second wireless device; and sends, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

According to the solution, after verification performed between a configuration device and a first wireless device succeeds, the first wireless device may obtain a device connection code sent by the configuration device, and then after verification performed between the configuration device and a second wireless device succeeds, the second wireless device may obtain the device connection code sent by the configuration device. In this way, after obtaining device identifier information of the first wireless device and the device connection code, the second wireless device may use the device connection code to perform secure connection with the first wireless device indicated by the device identifier information of the first wireless device. The first wireless device and the second wireless device do not need to support multiple WPS configuration manners, and the first wireless device and the second wireless device can perform simple and secure connection as long as the configuration device can acquire configuration password information of the first wireless device and the second wireless device, which improves user experience.

### Embodiment 5

This embodiment of the present invention provides a wireless device. As shown in FIG. 9, the wireless device 90 includes a providing unit 91, an interacting unit 92, and a connecting unit 93, where
the providing unit 91 is configured to provide configuration password information of the wireless device and device identifier information of the wireless device, so that a configuration device acquires the configuration password information of the wireless device and the device identifier information of the wireless device;
the interacting unit 92 is configured to perform verification on the configuration password information of the wireless device between the wireless device and the configuration device; and receive a second encryption value that is obtained after a device connection code is encrypted and that is sent by the configuration device, where the device connection code is generated by the configuration device and is used for device verification before the first wireless device and the wireless device establish a connection; and
the connecting unit 93 is configured to: decrypt the second encryption value to obtain the device connection code; perform device verification with the first wireless device by using at least the device connection code; and establish a connection with the first wireless device after the verification succeeds.

The interacting unit 92 is further configured to receive device identifier information of the first wireless device sent by the configuration device, and the connecting unit 93 is specifically configured to perform device verification with the first wireless device by using the device identifier information of the first wireless device and the device connection code.

The providing unit 91 is specifically configured to: provide a multi-dimensional code of the wireless device for the configuration device; or provide a PIN of the wireless device for the configuration device; or send a short-range low-power wireless signal to the configuration device, where the short-range low-power wireless signal includes the configuration password information of the wireless device; or provide the configuration password information of the wireless device by using push button configuration.

The short-range low-power wireless signal specifically includes a Near Field Communication NFC wireless signal, a low-power Bluetooth wireless signal, or a low-power Wireless Fidelity Wi-Fi signal.

The providing unit 91 is further specifically configured to send a configuration indication message to the configuration device, where the configuration indication message includes the device identifier information of the wireless device.

The multi-dimensional code is a static multi-dimensional code, or a dynamic multi-dimensional code dynamically generated by the wireless device, where the multi-dimensional code includes the configuration password information of the wireless device and/or the device identifier information of the wireless device.

The connecting unit 93 is specifically configured to:
perform Wireless Fidelity protected setup WPS with the first wireless device; verify whether both the first wireless device and the wireless device have the device connection code; and after the verification succeeds, receive a credential sent by the first wireless device, or send a credential to the first wireless device; and
perform a 4-way handshake with the first wireless device by using the credential, and establish a connection with the first wireless device after the handshake succeeds; or
perform a 4-way handshake with the first wireless device by using the device connection code as a pre-shared key; verify whether both the first wireless device and the wireless device have the device connection code; and establish a connection with the first wireless device after the verification succeeds.

This embodiment of the present invention provides a wireless device. The providing unit provides configuration password information of the wireless device and device identifier information of the wireless device, so that a configuration device acquires the configuration password information of the wireless device and the device identifier information of the wireless device. The interacting unit performs verification on the configuration password information of the wireless device with the configuration device; and receives a second encryption value that is obtained after a device connection code is encrypted and that is sent by the configuration device, where the device connection code is generated by the configuration device and is used for device verification before the first wireless device and the wireless device establish a connection. The connecting unit decrypts the second encryption value to obtain the device connection code; performs device verification with the first wireless device by using at least the device connection code; and establishes a connection with the first wireless device after the verification succeeds.

According to the solution, after verification performed between a configuration device and a wireless device succeeds, the wireless device may obtain a device connection code sent by the configuration device, so that the wireless device may use at least the device connection code to perform secure connection with a first wireless device indicated by device identifier information of the first wireless device. The first wireless device and the wireless device do not need to support multiple WPS configuration manners, and the first wireless device and the wireless device can perform simple and secure connection as long as the configuration device can acquire configuration password information of the first wireless device and the wireless device, which improves user experience.

### Embodiment 6

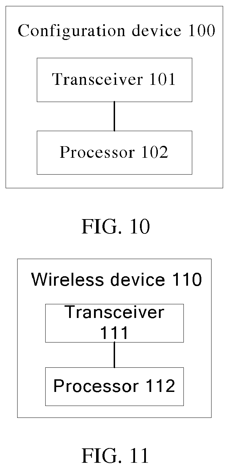

This embodiment of the present invention provides a configuration device. As shown in FIG. 10, the configuration device 100 includes a transceiver 101 and a processor 102.

The transceiver 101 is configured to acquire configuration password information of a first wireless device and device identifier information of the first wireless device.

The processor 102 is configured to: perform verification on the configuration password information of the first wireless device with the first wireless device; and send, to the first wireless device, a first encryption value obtained after a generated device connection code is encrypted, so that the first wireless device decrypts the first encryption value to obtain the device connection code, where the device connection code is used for device verification before the first wireless device and a second wireless device establish a connection.

The transceiver 101 is further configured to acquire configuration password information of the second wireless device and device identifier information of the second wireless device.

The processor 102 is configured to: perform verification on the configuration password information of the second wireless device with the second wireless device; and send, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

That the transceiver 101 acquires the configuration password information of the first/second wireless device is specifically implemented in any one of the following manners: scanning a multi-dimensional code of the first/second wireless device; or acquiring a personal identification number PIN of the first/second wireless device; or receiving a short-range low-power wireless signal sent by the first/second wireless device, where the short-range low-power wireless signal includes the configuration password information of the first/second wireless device; or acquiring the configuration password information of the first/second wireless device by using push button configuration.

The short-range low-power wireless signal specifically includes a Near Field Communication NFC wireless signal, a low-power Bluetooth wireless signal, or a low-power Wireless Fidelity Wi-Fi signal.

The transceiver 101 is further specifically configured to: scan the multi-dimensional code of the first/second wireless device; or receive a configuration indication message sent by the first/second wireless device, where the configuration indication message includes the device identifier information of the first/second wireless device.

The multi-dimensional code is a static multi-dimensional code, or a dynamic multi-dimensional code dynamically generated by the first/second wireless device, where the multi-dimensional code includes the configuration password information of the first/second wireless device and/or the device identifier information of the first/second wireless device.

The device connection code is specifically used for verifying, when the second wireless device and the first wireless device perform Wireless Fidelity protected setup WPS, whether both the first wireless device and the second wireless device have the device connection code; after the verification succeeds, the second wireless device receives a credential sent by the first wireless device, or the second wireless device sends a credential to the first wireless device; the second wireless device and the first wireless device perform a 4-way handshake by using the credential; and the second wireless device and the first wireless device establish a connection after the handshake succeeds;
or
verifying, when the second wireless device and the first wireless device perform a 4-way handshake by using the device connection code as a pre-shared key, whether both the first wireless device and the second wireless device have the device connection code; and the second wireless device and the first wireless device establish a connection after the verification succeeds.

This embodiment of the present invention provides a configuration device. The transceiver acquires configuration password information of a first wireless device and device identifier information of the first wireless device. The processor performs verification on the configuration password information of the first wireless device with the first wireless device; and sends, to the first wireless device, a first encryption value obtained after a generated device connection code is encrypted, so that the first wireless device decrypts the first encryption value to obtain the device connection code, where the device connection code is used for device verification before the first wireless device and a second wireless device establish a connection. The transceiver acquires configuration password information of the second wireless device and device identifier information of the second wireless device. The processor performs verification on the configuration password information of the second wireless device with the second wireless device; and sends, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds. According to the solution, after verification performed between a configuration device and a first wireless device succeeds, the first wireless device may obtain a device connection code sent by the configuration device, and then after verification performed between the configuration device and a second wireless device succeeds, the second wireless device may obtain the device connection code sent by the configuration device. In this way, after obtaining device identifier information of the first wireless device and the device connection code, the second wireless device may use the device connection code to perform secure connection with the first wireless device indicated by the device identifier information of the first wireless device. The first wireless device and the second wireless device do not need to support multiple WPS configuration manners, and the first wireless device and the second wireless device can perform simple and secure connection as long as the configuration device can acquire configuration password information of the first wireless device and the second wireless device, which improves user experience.

### Embodiment 7

This embodiment of the present invention provides a wireless device. As shown in FIG. 11, the wireless device 110 includes a transceiver 111 and a processor 112.

The transceiver 111 is configured to provide configuration password information of the wireless device and device identifier information of the wireless device, so that a configuration device acquires the configuration password information of the wireless device and the device identifier information of the wireless device.

The processor 112 is configured to: perform verification on the configuration password information of the wireless device between the wireless device and the configuration device; and receive a second encryption value that is obtained after a device connection code is encrypted and that is sent by the configuration device, where the device connection code is generated by the configuration device and is used for device verification before the first wireless device and the wireless device establish a connection.

The processor 112 is configured to: decrypt the second encryption value to obtain the device connection code; perform device verification with the first wireless device by using at least the device connection code; and establish a connection with the first wireless device after the verification succeeds.

The processor 112 is further configured to receive device identifier information of the first wireless device sent by the configuration device, and the processor 112 is specifically configured to perform device verification with the first wireless device by using the device identifier information of the first wireless device and the device connection code.

The transceiver 111 is specifically configured to: provide a multi-dimensional code of the wireless device for the configuration device; or provide a PIN of the wireless device for the configuration device; or send a short-range low-power wireless signal to the configuration device, where the short-range low-power wireless signal includes the configuration password information of the wireless device; or provide the configuration password information of the wireless device by using push button configuration.

The short-range low-power wireless signal specifically includes a Near Field Communication NFC wireless signal, a low-power Bluetooth wireless signal, or a low-power Wireless Fidelity Wi-Fi signal.

The transceiver 111 is further specifically configured to send a configuration indication message to the configuration device, where the configuration indication message includes the device identifier information of the wireless device.

The multi-dimensional code is a static multi-dimensional code, or a dynamic multi-dimensional code dynamically generated by the wireless device, where the multi-dimensional code includes the configuration password information of the wireless device and/or the device identifier information of the wireless device.

The processor 112 is specifically configured to:
perform Wireless Fidelity protected setup WPS with the first wireless device; verify whether both the first wireless device and the wireless device have the device connection code; and after the verification succeeds, receive a credential sent by the first wireless device, or send a credential to the first wireless device; and
perform a 4-way handshake with the first wireless device by using the credential, and establish a connection with the first wireless device after the handshake succeeds;
   or
perform a 4-way handshake with the first wireless device by using the device connection code as a pre-shared key; verify whether both the first wireless device and the wireless device have the device connection code; and establish a connection with the first wireless device after the verification succeeds.

This embodiment of the present invention provides a wireless device. The transceiver provides configuration password information of the wireless device and device identifier information of the wireless device, so that a configuration device acquires the configuration password information of the wireless device and the device identifier information of the wireless device. The processor performs verification on the configuration password information of the wireless device with the configuration device; and receives a second encryption value that is obtained after a device connection code is encrypted and that is sent by the configuration device, where the device connection code is generated by the configuration device and is used for device verification before the first wireless device and the wireless device establish a connection. The processor decrypts the second encryption value to obtain the device connection code; performs device verification with the first wireless device by using at least the device connection code; and establishes a connection with the first wireless device after the verification succeeds.

According to the solution, after verification performed between a configuration device and a wireless device succeeds, the wireless device may obtain a device connection code sent by the configuration device, so that the wireless device may use at least the device connection code to perform secure connection with a first wireless device indicated by device identifier information of the first wireless device. The first wireless device and the wireless device do not need to support multiple WPS configuration manners, and the first wireless device and the wireless device can perform simple and secure connection as long as the configuration device can acquire configuration password information of the first wireless device and the wireless device, which improves user experience.

It may be clearly understood by a person skilled in the art that, for the purpose of convenient and brief description, division of the foregoing function modules is used as an example for description. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a connection between devices, wherein the method comprises:
acquiring configuration password information of a first wireless device and device identifier information of the first wireless device;
performing verification on the configuration password information of the first wireless device with the first wireless device; and sending, to the first wireless device, a first encryption value obtained after a generated device connection code is encrypted, so that the first wireless device decrypts the first encryption value to obtain the device connection code, wherein the device connection code is used for device verification before the first wireless device and a second wireless device establish a connection;
acquiring configuration password information of the second wireless device and device identifier information of the second wireless device; and
performing verification on the configuration password information of the second wireless device with the second wireless device; and sending, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

2. The method according to claim 1, wherein the acquiring configuration password information of a first/second wireless device is specifically implemented in any one of the following manners: scanning a multi-dimensional code of the first/second wireless device; or acquiring a personal identification number PIN of the first/second wireless device; or receiving a short-range low-power wireless signal sent by the first/second wireless device, wherein the short-range low-power wireless signal comprises the configuration password information of the first/second wireless device; or acquiring the configuration password information of the first/second wireless device by using push button configuration; wherein
the short-range low-power wireless signal specifically comprises a Near Field Communication NFC wireless signal, a low-power Bluetooth wireless signal, or a low-power Wireless Fidelity Wi-Fi signal; and
the acquiring device identifier information of the first/second wireless device is specifically implemented in any one of the following manners: scanning the multi-dimensional code of the first/second wireless device; or receiving a configuration indication message sent by the first/second wireless device, wherein the configuration indication message comprises the device identifier information of the first/second wireless device; wherein
the multi-dimensional code is a static multi-dimensional code, or a dynamic multi-dimensional code dynamically generated by the first/second wireless device, wherein the multi-dimensional code comprises the configuration password information of the first/second wireless device and/or the device identifier information of the first/second wireless device.

3. The method according to claim 1 or 2, wherein the device connection code is specifically used for verifying, when the second wireless device and the first wireless device perform Wireless Fidelity protected setup WPS, whether both the first wireless device and the second wireless device have the device connection code; after the verification succeeds, the second wireless device receives a credential sent by the first wireless device, or the second wireless device sends a credential to the first wireless device; the second wireless device and the first wireless device perform a 4-way handshake by using the credential; and the second wireless device and the first wireless device establish a connection after the handshake succeeds;
or
verifying, when the second wireless device and the first wireless device perform a 4-way handshake by using the device connection code as a pre-shared key, whether both the first wireless device and the second wireless device have the device connection code; and the second wireless device and the first wireless device establish a connection after the verification succeeds.

4. A method for establishing a connection between devices, wherein the method comprises:
providing, by a second wireless device, configuration password information of the second wireless device and device identifier information of the second wireless device, so that a configuration device acquires the configuration password information of the second wireless device and the device identifier information of the second wireless device;
performing, by the second wireless device, verification on the configuration password information of the second wireless device with the configuration device; and receiving a second encryption value that is obtained after a device connection code is encrypted and that is sent by the configuration device, wherein the device connection code is generated by the configuration device and is used for device verification before the first wireless device and the second wireless device establish a connection; and
decrypting, by the second wireless device, the second encryption value to obtain the device connection code; performing device verification with the first wireless device by using at least the device connection code; and establishing a connection with the first wireless device after the verification succeeds.

5. The method according to claim 4, further comprising: receiving, by the second wireless device, device identifier information of the first wireless device sent by the configuration device; and
the performing device verification with the first wireless device by using at least the device connection code comprises: performing device verification with the first wireless device by using the device identifier information of the first wireless device and the device connection code.

6. The method according to claim 4 or 5, wherein the providing, by a second wireless device, configuration password information of the second wireless device, so that the configuration device acquires the configuration password information of the second wireless device is specifically implemented in any one of the following manners: providing a multi-dimensional code of the second wireless device for the configuration device; or providing a personal identification number PIN of the second wireless device for the configuration device; or sending a short-range low-power wireless signal to the configuration device, wherein the short-range low-power wireless signal comprises the configuration password information of the second wireless device; or providing the configuration password information of the second wireless device by using push button configuration; wherein
the short-range low-power wireless signal specifically comprises a Near Field Communication NFC wireless signal, a low-power Bluetooth wireless signal, or a low-power Wireless Fidelity Wi-Fi signal; and
the providing, by a second wireless device, device identifier information of the second wireless device, so that the configuration device acquires the device identifier information of the second wireless device is specifically implemented in any one of the following manners: providing the multi-dimensional code of the second wireless device for the configuration device; or sending a configuration indication message to the configuration device, wherein the configuration indication message comprises the device identifier information of the second wireless device; wherein
the multi-dimensional code is a static multi-dimensional code, or a dynamic multi-dimensional code dynamically generated by the second wireless device, wherein the multi-dimensional code comprises the configuration password information of the second wireless device and/or the device identifier information of the second wireless device.

7. The method according to any one of claims 4 to 6, wherein the performing device verification with the first wireless device by using at least the device connection code; and establishing a connection with the first wireless device after the verification succeeds specifically comprises:
performing, by the second wireless device, Wireless Fidelity protected setup WPS with the first wireless device; verifying whether both the first wireless device and the second wireless device have the device connection code; and after the verification succeeds, receiving a credential sent by the first wireless device, or sending a credential to the first wireless device; and
performing, by the second wireless device, a 4-way handshake with the first wireless device by using the credential, and establishing a connection with the first wireless device after the handshake succeeds;
or
performing, by the second wireless device, a 4-way handshake with the first wireless device by using the device connection code as a pre-shared key; verifying whether both the first wireless device and the second wireless device have the device connection code; and establishing a connection with the first wireless device after the verification succeeds.

8. A configuration device, wherein the configuration device comprises a first acquiring unit, a first interacting unit, a second acquiring unit, and a second interacting unit, wherein
the first acquiring unit is configured to acquire configuration password information of a first wireless device and device identifier information of the first wireless device;
the first interacting unit is configured to: perform verification on the configuration password information of the first wireless device with the first wireless device; and send, to the first wireless device, a first encryption value obtained after a generated device connection code is encrypted, so that the first wireless device decrypts the first encryption value to obtain the device connection code, wherein the device connection code is used for device verification before the first wireless device and a second wireless device establish a connection;
the second acquiring unit is configured to acquire configuration password information of the second wireless device and device identifier information of the second wireless device; and
the second interacting unit is configured to: perform verification on the configuration password information of the second wireless device with the second wireless device; and send, to the second wireless device, a second encryption value obtained after the device connection code is encrypted and the device identifier information of the first wireless device, so that the second wireless device decrypts the second encryption value to obtain the device connection code, performs device verification with the first wireless device by using the device identifier information of the first wireless device and the device connection code, and establishes a connection with the first wireless device after the verification succeeds.

9. The configuration device according to claim 8, wherein the first/second acquiring unit is specifically configured to: scan a multi-dimensional code of the first/second wireless device; or acquire a personal identification number PIN of the first/second wireless device; or receive a short-range low-power wireless signal sent by the first/second wireless device, wherein the short-range low-power wireless signal comprises the configuration password information of the first/second wireless device; or obtain the configuration password information of the first/second wireless device by using push button configuration; wherein
the short-range low-power wireless signal specifically comprises a Near Field Communication NFC wireless signal, a low-power Bluetooth wireless signal, or a low-power Wireless Fidelity Wi-Fi signal; and
the first/second acquiring unit is further specifically configured to: scan the multi-dimensional code of the first/second wireless device; or receive a configuration indication message sent by the first/second wireless device, wherein the configuration indication message comprises the device identifier information of the first/second wireless device; wherein
the multi-dimensional code is a static multi-dimensional code, or a dynamic multi-dimensional code dynamically generated by the first/second wireless device, wherein the multi-dimensional code comprises the configuration password information of the first/second wireless device and/or the device identifier information of the first/second wireless device.

10. The configuration device according to claim 8 or 9, wherein the device connection code is specifically used for verifying, when the second wireless device and the first wireless device perform Wireless Fidelity protected setup WPS, whether both the first wireless device and the second wireless device have the device connection code; after the verification succeeds, the second wireless device receives a credential sent by the first wireless device, or the second wireless device sends a credential to the first wireless device; the second wireless device and the first wireless device perform a 4-way handshake by using the credential; and the second wireless device and the first wireless device establish a connection after the handshake succeeds;
or
verifying, when the second wireless device and the first wireless device perform a 4-way handshake by using the device connection code as a pre-shared key, whether both the first wireless device and the second wireless device have the device connection code; and the second wireless device and the first wireless device establish a connection after the verification succeeds.

11. A wireless device, wherein the wireless device comprises a providing unit, an interacting unit, and a connecting unit, wherein
the providing unit is configured to provide configuration password information of the wireless device and device identifier information of the wireless device, so that a configuration device acquires the configuration password information of the wireless device and the device identifier information of the wireless device;
the interacting unit is configured to: perform verification on the configuration password information of the wireless device between the wireless device and the configuration device; and receive a second encryption value that is obtained after a device connection code is encrypted and that is sent by the configuration device, wherein the device connection code is generated by the configuration device and is used for device verification before the first wireless device and the wireless device establish a connection; and
the connecting unit is configured to: decrypt the second encryption value to obtain the device connection code; perform device verification with the first wireless device by using at least the device connection code; and establish a connection with the first wireless device after the verification succeeds.

12. The wireless device according to claim 11, wherein the interacting unit is further configured to receive device identifier information of the first wireless device sent by the configuration device; and
the connecting unit is specifically configured to perform device verification with the first wireless device by using the device identifier information of the first wireless device and the device connection code.

13. The wireless device according to claim 11 or 12, wherein the providing unit is specifically configured to: provide a multi-dimensional code of the wireless device for the configuration device; or provide a personal identification number PIN of the wireless device for the configuration device; or send a short-range low-power wireless signal to the configuration device, wherein the short-range low-power wireless signal comprises the configuration password information of the wireless device; or provide the configuration password information of the wireless device by using push button configuration; wherein
the short-range low-power wireless signal specifically comprises a Near Field Communication NFC wireless signal, a low-power Bluetooth wireless signal, or a low-power Wireless Fidelity Wi-Fi signal; and
the providing unit is further specifically configured to send a configuration indication message to the configuration device, wherein the configuration indication message comprises the device identifier information of the wireless device; wherein
the multi-dimensional code is a static multi-dimensional code, or a dynamic multi-dimensional code dynamically generated by the wireless device, wherein the multi-dimensional code comprises the configuration password information of the wireless device and/or the device identifier information of the wireless device.

14. The wireless device according to any one of claims 11 to 13, wherein the connecting unit is specifically configured to:
perform Wireless Fidelity protected setup WPS with the first wireless device; verify whether both the first wireless device and the wireless device have the device connection code; and after the verification succeeds, receive a credential sent by the first wireless device, or send a credential to the first wireless device; and
perform a 4-way handshake with the first wireless device by using the credential, and establish a connection with the first wireless device after the handshake succeeds;
or
perform a 4-way handshake with the first wireless device by using the device connection code as a pre-shared key; verify whether both the first wireless device and the wireless device have the device connection code; and establish a connection with the first wireless device after the verification succeeds.

## Patentansprüche

1. Verfahren zum Herstellen einer Verbindung zwischen Vorrichtungen, wobei das Verfahren Folgendes umfasst:
Erfassen von Konfigurationspasswort-Informationen einer ersten drahtlosen Vorrichtung und Vorrichtungsidentifizierer-Informationen der ersten drahtlosen Vorrichtung;
Durchführen einer Überprüfung an den Konfigurationspasswort-Informationen der ersten drahtlosen Vorrichtung mit der ersten drahtlosen Vorrichtung; und Senden eines ersten Verschlüsselungswerts, der erhalten wird, nachdem ein erzeugter Vorrichtungsverbindungscode verschlüsselt worden ist, zur ersten drahtlosen Vorrichtung, so dass die erste drahtlose Vorrichtung den ersten Verschlüsselungswert entschlüsselt, um den Vorrichtungsverbindungscode zu erhalten, wobei der Vorrichtungsverbindungscode für die Vorrichtungsüberprüfung verwendet wird, bevor die erste drahtlose Vorrichtung und eine zweite drahtlose Vorrichtung eine Verbindung herstellen;
Erfassen von Konfigurationspasswort-Informationen der zweiten drahtlosen Vorrichtung und Vorrichtungsidentifizierer-Informationen der zweiten drahtlosen Vorrichtung; und
Durchführen einer Überprüfung an den Konfigurationspasswort-Informationen der zweiten drahtlosen Vorrichtung mit der zweiten drahtlosen Vorrichtung; und Senden eines zweiten Verschlüsselungswerts, der erhalten wird, nachdem der Vorrichtungsverbindungscode verschlüsselt ist, und der Vorrichtungsidentifizierer-Informationen der ersten drahtlosen Vorrichtung zur zweiten drahtlosen Vorrichtung, so dass die zweite drahtlose Vorrichtung den zweiten Verschlüsselungswert entschlüsselt, um den Vorrichtungsverbindungscode zu erhalten, eine Vorrichtungsüberprüfung mit der ersten drahtlosen Vorrichtung unter Verwendung der Vorrichtungsidentifizierer-Informationen der ersten drahtlosen Vorrichtung und des Vorrichtungsverbindungscodes durchführt und eine Verbindung mit der ersten drahtlosen Vorrichtung herstellt, nachdem die Überprüfung erfolgreich ist.

2. Verfahren nach Anspruch 1, wobei das Erfassen von Konfigurationspasswort-Informationen einer ersten/zweiten drahtlosen Vorrichtung speziell in irgendeiner der folgenden Weisen implementiert wird: Abtasten eines mehrdimensionalen Codes der ersten/zweiten drahtlosen Vorrichtung; oder Erfassen einer persönlichen Identifikationsnummer PIN der ersten/zweiten drahtlosen Vorrichtung; oder Empfangen eines leistungsarmen drahtlosen Kurzstreckensignals, das durch die erste/zweite drahtlose Vorrichtung gesendet wird, wobei das leistungsarme drahtlose Kurzstreckensignal die Konfigurationspasswort-Informationen der ersten/zweiten drahtlosen Vorrichtung umfasst; oder Erfassen der Konfigurationspasswort-Informationen der ersten/zweiten drahtlosen Vorrichtung unter Verwendung einer Drucktastenkonfiguration; wobei
das leistungsarme drahtlose Kurzstreckensignal speziell ein drahtloses Signal einer Nahfeldkommunikation NFC, ein leistungsarmes drahtloses Bluetooth-Signal oder ein leistungsarmes "Wireless Fidelity"-Signal, Wi-Fi-Signal, umfasst; und
das Erfassen von Vorrichtungsidentifizierer-Informationen der ersten/zweiten drahtlosen Vorrichtung speziell in irgendeiner der folgenden Weisen implementiert wird: Abtasten des mehrdimensionalen Codes der ersten/zweiten drahtlosen Vorrichtung; oder Empfangen einer Konfigurationsangabemeldung, die durch die erste/zweite drahtlose Vorrichtung gesendet wird, wobei die Konfigurationsangabemeldung die Vorrichtungsidentifizierer-Informationen der ersten/zweiten drahtlosen Vorrichtung umfasst; wobei
der mehrdimensionale Code ein statischer mehrdimensionaler Code oder ein dynamischer mehrdimensionaler Code ist, der durch die erste/zweite drahtlose Vorrichtung dynamisch erzeugt wird, wobei der mehrdimensionale Code die Konfigurationspasswort-Informationen der ersten/zweiten drahtlosen Vorrichtung und/oder die Vorrichtungsidentifizierer-Informationen der ersten/zweiten drahtlosen Vorrichtung umfasst.

3. Verfahren nach Anspruch 1 oder 2, wobei der Vorrichtungsverbindungscode speziell zum Überprüfen, wenn die zweite drahtlose Vorrichtung und die erste drahtlose Vorrichtung eine durch Wireless Fidelity geschützte Einrichtung WPS durchführen, ob sowohl die erste drahtlose Vorrichtung als auch die zweite drahtlose Vorrichtung den Vorrichtungsverbindungscode aufweisen, verwendet wird; nachdem die Überprüfung erfolgreich ist, die zweite drahtlose Vorrichtung einen Berechtigungsnachweis empfängt, der durch die erste drahtlose Vorrichtung gesendet wird, oder die zweite drahtlose Vorrichtung einen Berechtigungsnachweis zur ersten drahtlosen Vorrichtung sendet; die zweite drahtlose Vorrichtung und die erste drahtlose Vorrichtung einen 4-Weg-Quittungsaustausch unter Verwendung des Berechtigungsnachweises durchführen; und die zweite drahtlose Vorrichtung und die erste drahtlose Vorrichtung eine Verbindung herstellen, nachdem der Quittungsaustausch erfolgreich ist;
oder
Überprüfen, wenn die zweite drahtlose Vorrichtung und die erste drahtlose Vorrichtung einen 4-Weg-Quittungsaustausch unter Verwendung des Vorrichtungsverbindungscodes als vorher vereinbarten Schlüssel durchführen, ob sowohl die erste drahtlose Vorrichtung als auch die zweite drahtlose Vorrichtung den Vorrichtungsverbindungscode aufweisen; und die zweite drahtlose Vorrichtung und die erste drahtlose Vorrichtung eine Verbindung herstellen, nachdem die Überprüfung erfolgreich ist.

4. Verfahren zum Herstellen einer Verbindung zwischen Vorrichtungen, wobei das Verfahren Folgendes umfasst:
durch eine zweite drahtlose Vorrichtung Bereitstellen von Konfigurationspasswort-Informationen der zweiten drahtlosen Vorrichtung und Vorrichtungsidentifizierer-Informationen der zweiten drahtlosen Vorrichtung, so dass eine Konfigurationsvorrichtung die Konfigurationspasswort-Informationen der zweiten drahtlosen Vorrichtung und die Vorrichtungsidentifizierer-Informationen der zweiten drahtlosen Vorrichtung erfasst;
Durchführen einer Überprüfung an den Konfigurationspasswort-Informationen der zweiten drahtlosen Vorrichtung mit der Konfigurationsvorrichtung durch die zweite drahtlose Vorrichtung; und Empfangen eines zweiten Verschlüsselungswerts, der erhalten wird, nachdem ein Vorrichtungsverbindungscode verschlüsselt ist, und der durch die Konfigurationsvorrichtung gesendet wird, wobei der Vorrichtungsverbindungscode durch die Konfigurationsvorrichtung erzeugt wird und für die Vorrichtungsüberprüfung verwendet wird, bevor die erste drahtlose Vorrichtung und die zweite drahtlose Vorrichtung eine Verbindung herstellen; und
Entschlüsseln des zweiten Verschlüsselungswerts durch die zweite drahtlose Vorrichtung, um den Vorrichtungsverbindungscode zu erhalten; Durchführen einer Vorrichtungsüberprüfung mit der ersten drahtlosen Vorrichtung unter Verwendung zumindest des Vorrichtungsverbindungscodes; und Herstellen einer Verbindung mit der ersten drahtlosen Vorrichtung, nachdem die Überprüfung erfolgreich ist.

5. Verfahren nach Anspruch 4, das ferner Folgendes umfasst: Empfangen von Vorrichtungsidentifizierer-Informationen der ersten drahtlosen Vorrichtung, die durch die Konfigurationsvorrichtung gesendet werden, durch die zweite drahtlose Vorrichtung; und
das Durchführen der Vorrichtungsüberprüfung mit der ersten drahtlosen Vorrichtung unter Verwendung mindestens des Vorrichtungsverbindungscodes Folgendes umfasst: Durchführen einer Vorrichtungsüberprüfung mit der ersten drahtlosen Vorrichtung unter Verwendung der Vorrichtungsidentifizierer-Informationen der ersten drahtlosen Vorrichtung und des Vorrichtungsverbindungscodes.

6. Verfahren nach Anspruch 4 oder 5, wobei das Bereitstellen von Konfigurationspasswort-Informationen einer zweiten drahtlosen Vorrichtung durch die zweite drahtlose Vorrichtung, so dass die Konfigurationsvorrichtung die Konfigurationspasswort-Informationen der zweiten drahtlosen Vorrichtung erfasst, speziell in irgendeiner der folgenden Weisen implementiert wird: Bereitstellen eines mehrdimensionalen Codes der zweiten drahtlosen Vorrichtung für die Konfigurationsvorrichtung; oder Bereitstellen einer persönlichen Identifikationsnummer PIN der zweiten drahtlosen Vorrichtung für die Konfigurationsvorrichtung; oder Senden eines leistungsarmen drahtlosen Kurzstreckensignals zur Konfigurationsvorrichtung, wobei das leistungsarme drahtlose Kurzstreckensignal die Konfigurationspasswort-Informationen der zweiten drahtlosen Vorrichtung umfasst; oder Bereitstellen der Konfigurationspasswort-Informationen der zweiten drahtlosen Vorrichtung unter Verwendung einer Drucktastenkonfiguration; wobei
das leistungsarme drahtlose Kurzstreckensignal speziell ein drahtloses Signal einer Nahfeldkommunikation NFC, ein leistungsarmes drahtloses Bluetooth-Signal oder ein leistungsarmes "Wireless Fidelity"-Signal, Wi-Fi-Signal, umfasst; und
das Bereitstellen von Vorrichtungsidentifizierer-Informationen der zweiten drahtlosen Vorrichtung durch die zweite drahtlose Vorrichtung, so dass die Konfigurationsvorrichtung die Vorrichtungsidentifizierer-Informationen der zweiten drahtlosen Vorrichtung erfasst, speziell in irgendeiner der folgenden Weisen implementiert wird: Bereitstellen des mehrdimensionalen Codes der zweiten drahtlosen Vorrichtung für die Konfigurationsvorrichtung; oder Senden einer Konfigurationsangabemeldung zur Konfigurationsvorrichtung, wobei die Konfigurationsangabemeldung die Vorrichtungsidentifizierer-Informationen der zweiten drahtlosen Vorrichtung umfasst; wobei
der mehrdimensionale Code ein statischer mehrdimensionaler Code oder ein dynamischer mehrdimensionaler Code ist, der durch die zweite drahtlose Vorrichtung dynamisch erzeugt wird, wobei der mehrdimensionale Code die Konfigurationspasswort-Informationen der zweiten drahtlosen Vorrichtung und/oder die Vorrichtungsidentifizierer-Informationen der zweiten drahtlosen Vorrichtung umfasst.

7. Verfahren nach einem der Ansprüche 4 bis 6, wobei das Durchführen der Vorrichtungsüberprüfung mit der ersten drahtlosen Vorrichtung unter Verwendung zumindest des Vorrichtungsverbindungscodes; und das Herstellen einer Verbindung mit der ersten drahtlosen Vorrichtung, nachdem die Überprüfung erfolgreich ist, speziell Folgendes umfasst:
Durchführen einer durch Wireless Fidelity geschützten Einrichtung WPS mit der ersten drahtlosen Vorrichtung durch die zweite drahtlose Vorrichtung; Überprüfen, ob sowohl die erste drahtlose Vorrichtung als auch die zweite drahtlose Vorrichtung den Vorrichtungsverbindungscode aufweisen; und nachdem die Überprüfung erfolgreich ist, Empfangen eines Berechtigungsnachweises, der durch die erste drahtlose Vorrichtung gesendet wird, oder Senden eines Berechtigungsnachweises zur ersten drahtlosen Vorrichtung; und
Durchführen eines 4-Weg-Quittungsaustauschs mit der ersten drahtlosen Vorrichtung durch die zweite drahtlose Vorrichtung unter Verwendung des Berechtigungsnachweises und Herstellen einer Verbindung mit der ersten drahtlosen Vorrichtung, nachdem der Quittungsaustausch erfolgreich ist;
oder
Durchführen eines 4-Weg-Quittungsaustauschs mit der ersten drahtlosen Vorrichtung durch die zweite drahtlose Vorrichtung unter Verwendung des Vorrichtungsverbindungscodes als vorher vereinbarten Schlüssel; Überprüfen, ob sowohl die erste drahtlose Vorrichtung als auch die zweite drahtlose Vorrichtung den Vorrichtungsverbindungscode aufweisen; und Herstellen einer Verbindung mit der ersten drahtlosen Vorrichtung, nachdem die Überprüfung erfolgreich ist.

8. Konfigurationsvorrichtung, wobei die Konfigurationsvorrichtung eine erste Erfassungseinheit, eine erste Wechselwirkungseinheit, eine zweite Erfassungseinheit und eine zweite Wechselwirkungseinheit umfasst, wobei
die erste Erfassungseinheit dazu konfiguriert ist, Konfigurationspasswort-Informationen einer ersten drahtlosen Vorrichtung und Vorrichtungsidentifizierer-Informationen der ersten drahtlosen Vorrichtung zu erfassen;
die erste Wechselwirkungseinheit dazu konfiguriert ist: eine Überprüfung an den Konfigurationspasswort-Informationen der ersten drahtlosen Vorrichtung mit der ersten drahtlosen Vorrichtung durchzuführen; und zur ersten drahtlosen Vorrichtung einen ersten Verschlüsselungswert zu senden, der erhalten wird, nachdem ein erzeugter Vorrichtungsverbindungscode verschlüsselt ist, so dass die erste drahtlose Vorrichtung den ersten Verschlüsselungswert entschlüsselt, um den Vorrichtungsverbindungscode zu erhalten, wobei der Vorrichtungsverbindungscode für die Vorrichtungsüberprüfung verwendet wird, bevor die erste drahtlose Vorrichtung und eine zweite drahtlose Vorrichtung eine Verbindung herstellen;
die zweite Erfassungseinheit dazu konfiguriert ist, Konfigurationspasswort-Informationen der zweiten drahtlosen Vorrichtung und Vorrichtungsidentifizierer-Informationen der zweiten drahtlosen Vorrichtung zu erfassen; und
die zweite Wechselwirkungseinheit dazu konfiguriert ist: eine Überprüfung an den Konfigurationspasswort-Informationen der zweiten drahtlosen Vorrichtung mit der zweiten drahtlosen Vorrichtung durchzuführen; und zur zweiten drahtlosen Vorrichtung einen zweiten Verschlüsselungswert, der erhalten wird, nachdem der Vorrichtungsverbindungscode verschlüsselt ist, und die Vorrichtungsidentifizierer-Informationen der ersten drahtlosen Vorrichtung zu senden, so dass die zweite drahtlose Vorrichtung den zweiten Verschlüsselungswert entschlüsselt, um den Vorrichtungsverbindungscode zu erhalten, eine Vorrichtungsüberprüfung mit der ersten drahtlosen Vorrichtung unter Verwendung der Vorrichtungsidentifizierer-Informationen der ersten drahtlosen Vorrichtung und des Vorrichtungsverbindungscodes durchführt, und eine Verbindung mit der ersten drahtlosen Vorrichtung herstellt, nachdem die Überprüfung erfolgreich ist.

9. Konfigurationsvorrichtung nach Anspruch 8, wobei die erste/zweite Erfassungseinheit speziell dazu konfiguriert ist: einen mehrdimensionalen Code der ersten/zweiten drahtlosen Vorrichtung abzutasten; oder eine persönliche Identifikationsnummer PIN der ersten/zweiten drahtlosen Vorrichtung zu erfassen; oder ein leistungsarmes drahtloses Kurzstreckensignal zu empfangen, das durch die erste/zweite drahtlose Vorrichtung gesendet wird, wobei das leistungsarme drahtlose Kurzstreckensignal die Konfigurationspasswort-Informationen der ersten/zweiten drahtlosen Vorrichtung umfasst; oder die Konfigurationspasswort-Informationen der ersten/zweiten drahtlosen Vorrichtung unter Verwendung einer Drucktastenkonfiguration zu erhalten; wobei
das leistungsarme drahtlose Kurzstreckensignal speziell ein drahtloses Signal einer Nahfeldkommunikation NFC, ein leistungsarmes drahtloses Bluetooth-Signal oder ein leistungsarmes "Wireless Fidelity"-Signal, Wi-Fi-Signal, umfasst; und
die erste/zweite Erfassungseinheit ferner speziell dazu konfiguriert ist: den mehrdimensionalen Code der ersten/zweiten drahtlosen Vorrichtung abzutasten; oder eine Konfigurationsangabemeldung zu empfangen, die durch die erste/zweite drahtlose Vorrichtung gesendet wird, wobei die Konfigurationsangabemeldung die Vorrichtungsidentifizierer-Informationen der ersten/zweiten drahtlosen Vorrichtung umfasst; wobei
der mehrdimensionale Code ein statischer mehrdimensionaler Code oder ein dynamischer mehrdimensionaler Code ist, der durch die erste/zweite drahtlose Vorrichtung dynamisch erzeugt wird, wobei der mehrdimensionale Code die Konfigurationspasswort-Informationen der ersten/zweiten drahtlosen Vorrichtung und/oder die Vorrichtungsidentifizierer-Informationen der ersten/zweiten drahtlosen Vorrichtung umfasst.

10. Konfigurationsvorrichtung nach Anspruch 8 oder 9, wobei der Vorrichtungsverbindungscode speziell zum Überprüfen, wenn die zweite drahtlose Vorrichtung und die erste drahtlose Vorrichtung eine durch Wireless Fidelity geschützte Einrichtung WPS durchführen, ob sowohl die erste drahtlose Vorrichtung als auch die zweite drahtlose Vorrichtung den Vorrichtungsverbindungscode aufweisen, verwendet wird; nachdem die Überprüfung erfolgreich ist, die zweite drahtlose Vorrichtung einen Berechtigungsnachweis empfängt, der durch die erste drahtlose Vorrichtung gesendet wird, oder die zweite drahtlose Vorrichtung einen Berechtigungsnachweis zur ersten drahtlosen Vorrichtung sendet; die zweite drahtlose Vorrichtung und die erste drahtlose Vorrichtung einen 4-Weg-Quittungsaustausch unter Verwendung des Berechtigungsnachweises durchführen; und die zweite drahtlose Vorrichtung und die erste drahtlose Vorrichtung eine Verbindung herstellen, nachdem der Quittungsaustausch erfolgreich ist;
oder
Überprüfen, wenn die zweite drahtlose Vorrichtung und die erste drahtlose Vorrichtung einen 4-Weg-Quittungsaustausch unter Verwendung des Vorrichtungsverbindungscodes als vorher vereinbarten Schlüssel durchführen, ob sowohl die erste drahtlose Vorrichtung als auch die zweite drahtlose Vorrichtung den Vorrichtungsverbindungscode aufweisen; und die zweite drahtlose Vorrichtung und die erste drahtlose Vorrichtung eine Verbindung herstellen, nachdem die Überprüfung erfolgreich ist.

11. Drahtlose Vorrichtung, wobei die drahtlose Vorrichtung eine Bereitstellungseinheit, eine Wechselwirkungseinheit und eine Verbindungseinheit umfasst, wobei die Bereitstellungseinheit dazu konfiguriert ist, Konfigurationspasswort-Informationen der drahtlosen Vorrichtung und Vorrichtungsidentifizierer-Informationen der drahtlosen Vorrichtung bereitzustellen, so dass eine Konfigurationsvorrichtung die Konfigurationspasswort-Informationen der drahtlosen Vorrichtung und die Vorrichtungsidentifizierer-Informationen der drahtlosen Vorrichtung erfasst;
die Wechselwirkungseinheit dazu konfiguriert ist: eine Überprüfung an den Konfigurationspasswort-Informationen der drahtlosen Vorrichtung zwischen der drahtlosen Vorrichtung und der Konfigurationsvorrichtung durchzuführen; und einen zweiten Verschlüsselungswert zu empfangen, der erhalten wird, nachdem ein Vorrichtungsverbindungscode verschlüsselt ist, und der durch die Konfigurationsvorrichtung gesendet wird, wobei der Vorrichtungsverbindungscode durch die Konfigurationsvorrichtung erzeugt wird und für die Vorrichtungsüberprüfung verwendet wird, bevor die erste drahtlose Vorrichtung und die drahtlose Vorrichtung eine Verbindung herstellen; und
die Verbindungseinheit dazu konfiguriert ist: den zweiten Verschlüsselungswert zu entschlüsseln, um den Vorrichtungsverbindungscode zu erhalten; die Vorrichtungsüberprüfung mit der ersten drahtlosen Vorrichtung unter Verwendung mindestens des Vorrichtungsverbindungscodes durchzuführen; und eine Verbindung mit der ersten drahtlosen Vorrichtung herzustellen, nachdem die Überprüfung erfolgreich ist.

12. Drahtlose Vorrichtung nach Anspruch 11, wobei die Wechselwirkungseinheit ferner dazu konfiguriert ist, Vorrichtungsidentifizierer-Informationen der ersten drahtlosen Vorrichtung zu empfangen, die durch die Konfigurationsvorrichtung gesendet werden; und
die Verbindungseinheit speziell dazu konfiguriert ist, eine Vorrichtungsüberprüfung mit der ersten drahtlosen Vorrichtung unter Verwendung der Vorrichtungsidentifizierer-Informationen der ersten drahtlosen Vorrichtung und des Vorrichtungsverbindungscodes durchzuführen.

13. Drahtlose Vorrichtung nach Anspruch 11 oder 12, wobei die Bereitstellungseinheit speziell dazu konfiguriert ist: einen mehrdimensionalen Code der drahtlosen Vorrichtung für die Konfigurationsvorrichtung bereitzustellen; oder eine persönliche Identifikationsnummer PIN der drahtlosen Vorrichtung für die Konfigurationsvorrichtung bereitzustellen; oder ein leistungsarmes drahtloses Kurzstreckensignal zur Konfigurationsvorrichtung zu senden, wobei das leistungsarme drahtlose Kurzstreckensignal die Konfigurationspasswort-Informationen der drahtlosen Vorrichtung umfasst; oder die Konfigurationspasswort-Informationen der drahtlosen Vorrichtung unter Verwendung einer Drucktastenkonfiguration bereitzustellen; wobei
das leistungsarme drahtlose Kurzstreckensignal speziell ein drahtloses Signal einer Nahfeldkommunikation NFC, ein leistungsarmes drahtloses Bluetooth-Signal oder ein leistungsarmes "Wireless Fidelity"-Signal, Wi-Fi-Signal, umfasst; und
die Bereitstellungseinheit ferner speziell dazu konfiguriert ist, eine Konfigurationsangabemeldung zur Konfigurationsvorrichtung zu senden, wobei die Konfigurationsangabemeldung die Vorrichtungsidentifizierer-Informationen der drahtlosen Vorrichtung umfasst; wobei
der mehrdimensionale Code ein statischer mehrdimensionaler Code oder ein dynamischer mehrdimensionaler Code ist, der durch die drahtlose Vorrichtung dynamisch erzeugt wird, wobei der mehrdimensionale Code die Konfigurationspasswort-Informationen der drahtlosen Vorrichtung und/oder die Vorrichtungsidentifizierer-Informationen der drahtlosen Vorrichtung umfasst.

14. Drahtlose Vorrichtung nach einem der Ansprüche 11 bis 13, wobei die Verbindungseinheit speziell dazu konfiguriert ist:
eine durch Wireless Fidelity geschützte Einrichtung WPS mit der ersten drahtlosen Vorrichtung durchzuführen; zu überprüfen, ob sowohl die erste drahtlose Vorrichtung als auch die drahtlose Vorrichtung den Vorrichtungsverbindungscode aufweisen; und nachdem die Überprüfung erfolgreich ist, einen Berechtigungsnachweis zu empfangen, der durch die erste drahtlose Vorrichtung gesendet wird, oder einen Berechtigungsnachweis zur ersten drahtlosen Vorrichtung zu senden; und
einen 4-Weg-Quittungsaustausch mit der ersten drahtlosen Vorrichtung unter Verwendung des Berechtigungsnachweises durchzuführen, und eine Verbindung mit der ersten drahtlosen Vorrichtung herzustellen, nachdem der Quittungsaustausch erfolgreich ist;
oder
einen 4-Weg-Quittungsaustausch mit der ersten drahtlosen Vorrichtung unter Verwendung des Vorrichtungsverbindungscodes als vorher vereinbarten Schlüssel durchzuführen; zu überprüfen, ob sowohl die erste drahtlose Vorrichtung als auch die drahtlose Vorrichtung den Vorrichtungsverbindungscode aufweisen; und eine Verbindung mit der ersten drahtlosen Vorrichtung herzustellen, nachdem die Überprüfung erfolgreich ist.

## Revendications

1. Procédé d'établissement d'une connexion entre des dispositifs, le procédé consistant à :
acquérir une information de mot de passe de configuration d'un premier dispositif sans fil et une information d'identifiant de dispositif du premier dispositif sans fil ;
réaliser avec le premier dispositif sans fil une vérification de l'information de mot de passe de configuration du premier dispositif sans fil ; et envoyer au premier dispositif sans fil une première valeur de cryptage obtenue après le cryptage d'un code de connexion de dispositif généré, de sorte que le premier dispositif sans fil décrypte la première valeur de cryptage afin d'obtenir le code de connexion de dispositif, le code de connexion de dispositif étant utilisé pour réaliser une vérification de dispositif avant que le premier dispositif sans fil et un second dispositif sans fil n'établissent une connexion ;
acquérir une information de mot de passe de configuration du second dispositif sans fil et une information d'identifiant de dispositif du second dispositif sans fil ; et
réaliser avec le second dispositif sans fil une vérification de l'information de mot de passe de configuration du second dispositif sans fil ; et envoyer au second dispositif sans fil une seconde valeur de cryptage obtenue après le cryptage du code de connexion de dispositif et l'information d'identifiant de dispositif du premier dispositif sans fil, de sorte que le second dispositif sans fil décrypte la seconde valeur de cryptage afin d'obtenir le code de connexion de dispositif, réalise une vérification de dispositif avec le premier dispositif sans fil au moyen de l'information d'identifiant de dispositif du premier dispositif sans fil et du code de connexion de dispositif, et établisse une connexion avec le premier dispositif sans fil après la réussite de la vérification.

2. Procédé selon la revendication 1, dans lequel l'acquisition d'une information de mot de passe de configuration d'un premier/second dispositif sans fil est spécifiquement mise en oeuvre de l'une quelconque des façons suivantes : en analysant un code multidimensionnel du premier/second dispositif sans fil ; ou en acquérant un numéro d'identification personnelle (PIN) du premier/second dispositif sans fil ; ou en recevant un signal sans fil à courte portée et de faible puissance envoyé par le premier/second dispositif sans fil, le signal sans fil à courte portée et de faible puissance comprenant l'information de mot de passe de configuration du premier/second dispositif sans fil ; ou en acquérant l'information de mot de passe de configuration du premier/second dispositif sans fil au moyen d'une configuration par bouton-poussoir,
le signal sans fil à courte portée et de faible puissance comprenant spécifiquement un signal sans fil de communication en champ proche (NFC), un signal sans fil Bluetooth de faible puissance ou un signal de technologie Wi-Fi (Wireless Fidelity) de faible puissance ; et
dans lequel l'acquisition d'une information d'identifiant de dispositif du premier/second dispositif sans fil est spécifiquement mise en oeuvre de l'une quelconque des façons suivantes : en analysant le code multidimensionnel du premier/second dispositif sans fil ; ou en recevant un message d'indication de configuration envoyé par le premier/second dispositif sans fil, le message d'indication de configuration comprenant l'information d'identifiant de dispositif du premier/second dispositif sans fil,
le code multidimensionnel étant un code multidimensionnel statique, ou un code multidimensionnel dynamique généré par le premier/second dispositif sans fil, le code multidimensionnel comprenant l'information de mot de passe de configuration du premier/second dispositif sans fil et/ou l'information d'identifiant de dispositif du premier/second dispositif sans fil.

3. Procédé selon la revendication 1 ou 2, dans lequel le code de connexion de dispositif est spécifiquement utilisé pour vérifier, quand le second dispositif sans fil et le premier dispositif sans fil réalisent une configuration Wi-Fi protégée au moyen de la technologie WPS (Wireless Fidelity Protected Setup), si le premier dispositif sans fil et le second dispositif sans fil ont l'un et l'autre le code de connexion de dispositif ; et dans lequel, après la réussite de la vérification, le second dispositif sans fil reçoit un authentifiant envoyé par le premier dispositif sans fil, ou le second dispositif sans fil envoie un authentifiant au premier dispositif sans fil ; le second dispositif sans fil et le premier dispositif sans fil réalisent une validation à quadruple sens au moyen de l'authentifiant ; et le second dispositif sans fil et le premier dispositif sans fil établissent une connexion après la réussite de la validation ; ou
vérifier, quand le second dispositif sans fil et le premier dispositif sans fil réalisent une validation à quadruple sens au moyen du code de connexion de dispositif en guise de clé prépartagée, si le premier dispositif sans fil et le second dispositif sans fil ont l'un et l'autre le code de connexion de dispositif ; et dans lequel le second dispositif sans fil et le premier dispositif sans fil établissent une connexion après la réussite de la vérification.

4. Procédé d'établissement d'une connexion entre des dispositifs, le procédé consistant à:
fournir, par un second dispositif sans fil, une information de mot de passe de configuration du second dispositif sans fil et une information d'identifiant de dispositif du second dispositif sans fil, de sorte qu'un dispositif de configuration acquière l'information de mot de passe de configuration du second dispositif sans fil et l'information d'identifiant de dispositif du second dispositif sans fil ;
réaliser, par le second dispositif sans fil, une vérification de l'information de mot de passe de configuration du second dispositif sans fil avec le dispositif de configuration ; et recevoir une seconde valeur de cryptage obtenue après le cryptage d'un code de dispositif de connexion, et envoyée par le dispositif de configuration, le code de connexion de dispositif étant généré par le dispositif de configuration et utilisé pour réaliser une vérification de dispositif avant que le premier dispositif sans fil et le second dispositif sans fil n'établissent une connexion ; et
décrypter, par le second dispositif sans fil, la seconde valeur de cryptage afin d'obtenir le code de connexion de dispositif ; réaliser une vérification de dispositif avec le premier dispositif sans fil au moyen, au moins, du code de connexion de dispositif ; et établir une connexion avec le premier dispositif sans fil après la réussite de la vérification.

5. Procédé selon la revendication 4, consistant en outre à: recevoir, par le second dispositif sans fil, une information d'identifiant de dispositif du premier dispositif sans fil envoyée par le dispositif de configuration ; et
dans lequel la réalisation de la vérification de dispositif avec le premier dispositif sans fil au moyen, au moins, du code de connexion de dispositif consiste à : réaliser une vérification de dispositif avec le premier dispositif sans fil au moyen de l'information d'identifiant de dispositif du premier dispositif sans fil et du code de connexion de dispositif.

6. Procédé selon la revendication 4 ou 5, dans lequel la fourniture, par un second dispositif sans fil, d'une information de mot de passe de configuration du second dispositif sans fil, de sorte que le dispositif de configuration acquière l'information de mot de passe de configuration du second dispositif sans fil, est spécifiquement mise en oeuvre de l'une quelconque des façons suivantes : en fournissant un code multidimensionnel du second dispositif sans fil au dispositif de configuration ; ou en fournissant un numéro d'identification personnelle (PIN) du second dispositif sans fil au dispositif de configuration ; ou en envoyant un signal sans fil à courte portée et de faible puissance au dispositif de configuration, le signal sans fil à courte portée et de faible puissance comprenant l'information de mot de passe de configuration du second dispositif sans fil ; ou en fournissant l'information de mot de passe de configuration du second dispositif sans fil au moyen d'une configuration par bouton-poussoir,
le signal sans fil à courte portée et de faible puissance comprenant spécifiquement un signal sans fil de communication en champ proche (NFC), un signal sans fil Bluetooth de faible puissance ou un signal de technologie Wi-Fi (Wireless Fidelity) de faible puissance ; et
dans lequel la fourniture, par un second dispositif sans fil, d'une information d'identifiant de dispositif du second dispositif sans fil, de sorte que le dispositif de configuration acquière l'information d'identifiant de dispositif du second dispositif sans fil, est spécifiquement mise en oeuvre de l'une quelconque des façons suivantes :
en fournissant le code multidimensionnel du second dispositif sans fil au dispositif de configuration ; ou en envoyant un message d'indication de configuration au dispositif de configuration, le message d'indication de configuration comprenant l'information d'identifiant de dispositif du second dispositif sans fil,
le code multidimensionnel étant un code multidimensionnel statique, ou un code multidimensionnel dynamique généré de manière dynamique par le second dispositif sans fil, le code multidimensionnel comprenant l'information de mot de passe de configuration du second dispositif sans fil et/ou l'information d'identifiant de dispositif du second dispositif sans fil.

7. Procédé selon l'une quelconque des revendications 4 à 6, dans lequel la réalisation d'une vérification de dispositif avec le premier dispositif sans fil au moyen, au moins, du code de connexion de dispositif, et l'établissement d'une connexion avec le premier dispositif sans fil après la réussite de la vérification, consistent spécifiquement à :
réaliser, par le second dispositif sans fil, une configuration Wi-Fi protégée au moyen de la technologie WPS (Wireless Fidelity Protected Setup) avec le premier dispositif sans fil ; vérifier si le premier dispositif sans fil et le second dispositif sans fil ont l'un et l'autre le code de connexion de dispositif ; et après la réussite de la vérification, recevoir un authentifiant envoyé par le premier dispositif sans fil, ou envoyer un authentifiant au premier dispositif sans fil ; et
réaliser, par le second dispositif sans fil, une validation à quadruple sens avec le premier dispositif sans fil au moyen de l'authentifiant, et établir une connexion avec le premier dispositif sans fil après la réussite de la validation ;
ou
réaliser, par le second dispositif sans fil, une validation à quadruple sens avec le premier dispositif sans fil au moyen du code de connexion de dispositif en guise de clé prépartagée ; vérifier si le premier dispositif sans fil et le second dispositif sans fil ont l'un et l'autre le code de connexion de dispositif ; et établir une connexion avec le premier dispositif sans fil après la réussite de la vérification.

8. Dispositif de configuration, le dispositif de configuration comprenant une première unité d'acquisition, une première unité d'interaction, une seconde unité d'acquisition et une seconde unité d'interaction,
la première unité d'acquisition étant conçue pour acquérir une information de mot de passe de configuration d'un premier dispositif sans fil et une information d'identifiant de dispositif du premier dispositif sans fil ;
la première unité d'interaction étant conçue pour : réaliser avec le premier dispositif sans fil une vérification de l'information de mot de passe de configuration du premier dispositif sans fil ; et envoyer au premier dispositif sans fil une première valeur de cryptage obtenue après le cryptage d'un code de connexion de dispositif généré, de sorte que le premier dispositif sans fil décrypte la première valeur de cryptage afin d'obtenir le code de connexion de dispositif, le code de connexion de dispositif étant utilisé pour réaliser une vérification de dispositif avant que le premier dispositif sans fil et un second dispositif sans fil n'établissent une connexion ;
la seconde unité d'acquisition étant conçue pour acquérir une information de mot de passe de configuration du second dispositif sans fil et une information d'identifiant de dispositif du second dispositif sans fil ; et
la seconde unité d'interaction étant conçue pour : réaliser avec le second dispositif sans fil une vérification de l'information de mot de passe de configuration du second dispositif sans fil ; et envoyer au second dispositif sans fil une seconde valeur de cryptage obtenue après le cryptage du code de connexion de dispositif et l'information d'identifiant de dispositif du premier dispositif sans fil, de sorte que le second dispositif sans fil décrypte la seconde valeur de cryptage afin d'obtenir le code de connexion de dispositif, réalise une vérification de dispositif avec le premier dispositif sans fil au moyen de l'information d'identifiant de dispositif du premier dispositif sans fil et du code de connexion de dispositif, et établisse une connexion avec le premier dispositif sans fil après la réussite de la vérification.

9. Dispositif de configuration selon la revendication 8, dans lequel la première/seconde unité d'acquisition est spécifiquement conçue pour : analyser un code multidimensionnel du premier/second dispositif sans fil ; ou acquérir un numéro d'identification personnelle (PIN) du premier/second dispositif sans fil ; ou recevoir un signal sans fil à courte portée et de faible puissance envoyé par le premier/second dispositif sans fil, le signal sans fil à courte portée et de faible puissance comprenant l'information de mot de passe de configuration du premier/second dispositif sans fil ; ou obtenir l'information de mot de passe de configuration du premier/second dispositif sans fil au moyen d'une configuration par bouton-poussoir,
le signal sans fil à courte portée et de faible puissance comprenant spécifiquement un signal sans fil de communication en champ proche (NFC), un signal sans fil Bluetooth de faible puissance ou un signal de technologie Wi-Fi (Wireless Fidelity) de faible puissance ; et
la première/seconde unité d'acquisition est en outre spécifiquement conçue pour :
analyser le code multidimensionnel du premier/second dispositif sans fil ; ou recevoir un message d'indication de configuration envoyé par le premier/second dispositif sans fil, le message d'indication de configuration comprenant l'information d'identifiant de dispositif du premier/second dispositif sans fil,
le code multidimensionnel étant un code multidimensionnel statique, ou un code multidimensionnel dynamique généré de manière dynamique par le premier/second dispositif sans fil, le code multidimensionnel comprenant l'information de mot de passe de configuration du premier/second dispositif sans fil et/ou l'information d'identifiant de dispositif du premier/second dispositif sans fil.

10. Dispositif de configuration selon la revendication 8 ou 9, dans lequel le code de connexion de dispositif est spécifiquement utilisé pour vérifier, quand le second dispositif sans fil et le premier dispositif sans fil réalisent une configuration Wi-Fi protégée au moyen de la technologie WPS (Wireless Fidelity Protected Setup), si le premier dispositif sans fil et le second dispositif sans fil ont l'un et l'autre le code de connexion de dispositif ; et dans lequel, après la réussite de la vérification, le second dispositif sans fil reçoit un authentifiant envoyé par le premier dispositif sans fil, ou le second dispositif sans fil envoie un authentifiant au premier dispositif sans fil ; le second dispositif sans fil et le premier dispositif sans fil réalisent une validation à quadruple sens au moyen de l'authentifiant ; et le second dispositif sans fil et le premier dispositif sans fil établissent une connexion après la réussite de la validation ;
ou
vérifier, quand le second dispositif sans fil et le premier dispositif sans fil réalisent une validation à quadruple sens au moyen du code de connexion de dispositif en guise de clé prépartagée, si le premier dispositif sans fil et le second dispositif sans fil ont l'un et l'autre le code de connexion de dispositif ; et dans lequel le second dispositif sans fil et le premier dispositif sans fil établissent une connexion après la réussite de la vérification.

11. Dispositif sans fil, le dispositif sans fil comprenant une unité de fourniture, une unité d'interaction et une unité de connexion,
l'unité de fourniture étant conçue pour fournir une information de mot de passe de configuration du dispositif sans fil et une information d'identifiant de dispositif du dispositif sans fil, de sorte qu'un dispositif de configuration acquière l'information de mot de passe de configuration du dispositif sans fil et l'information d'identifiant de dispositif du dispositif sans fil ;
l'unité d'interaction étant conçue pour : réaliser une vérification de l'information de mot de passe de configuration du dispositif sans fil entre le dispositif sans fil et le dispositif de configuration ; et recevoir une seconde valeur de cryptage obtenue après le cryptage d'un code de dispositif de connexion, et envoyée par le dispositif de configuration, le code de connexion de dispositif étant généré par le dispositif de configuration et utilisé pour réaliser une vérification de dispositif avant que le premier dispositif sans fil et le dispositif sans fil n'établissent une connexion ; et l'unité de connexion étant conçue pour : décrypter la seconde valeur de cryptage afin d'obtenir le code de connexion de dispositif ; réaliser une vérification de dispositif avec le premier dispositif sans fil au moyen, au moins, du code de connexion de dispositif ; et établir une connexion avec le premier dispositif sans fil après la réussite de la vérification.

12. Dispositif sans fil selon la revendication 11, dans lequel l'unité d'interaction est en outre conçue pour recevoir une information d'identifiant de dispositif du premier dispositif sans fil envoyée par le dispositif de configuration ; et
dans lequel l'unité de connexion est spécifiquement conçue pour réaliser une vérification de dispositif avec le premier dispositif sans fil au moyen de l'information d'identifiant de dispositif du premier dispositif sans fil et du code de connexion de dispositif.

13. Dispositif sans fil selon la revendication 11 ou 12, dans lequel l'unité de fourniture est spécifiquement conçue pour : fournir un code multidimensionnel du dispositif sans fil au dispositif de configuration ; ou fournir un numéro d'identification personnelle (PIN) du dispositif sans fil au dispositif de configuration ; ou envoyer un signal sans fil à courte portée et de faible puissance au dispositif de configuration, le signal sans fil à courte portée et de faible puissance comprenant l'information de mot de passe de configuration du dispositif sans fil ; ou fournir l'information de mot de passe de configuration du dispositif sans fil au moyen d'une configuration par bouton-poussoir,
le signal sans fil à courte portée et de faible puissance comprenant spécifiquement un signal sans fil de communication en champ proche (NFC), un signal sans fil Bluetooth de faible puissance ou un signal de technologie Wi-Fi (Wireless Fidelity) de faible puissance ; et
dans lequel l'unité de fourniture est en outre spécifiquement conçue pour envoyer un message d'indication de configuration au dispositif de configuration, le message d'indication de configuration comprenant l'information d'identifiant de dispositif du dispositif sans fil,
le code multidimensionnel étant un code multidimensionnel statique, ou un code multidimensionnel dynamique généré de manière dynamique par le dispositif sans fil, le code multidimensionnel comprenant l'information de mot de passe de configuration du dispositif sans fil et/ou l'information d'identifiant de dispositif du dispositif sans fil.

14. Dispositif sans fil selon l'une quelconque des revendications 11 à 13, dans lequel l'unité de connexion est spécialement conçue pour :
réaliser une configuration Wi-Fi protégée au moyen de la technologie WPS (Wireless Fidelity Protected Setup) avec le premier dispositif sans fil ;
vérifier si le premier dispositif sans fil et le dispositif sans fil ont l'un et l'autre le code de connexion de dispositif ; et après la réussite de la vérification, recevoir un authentifiant envoyé par le premier dispositif sans fil, ou envoyer un authentifiant au premier dispositif sans fil ; et
réaliser une validation à quadruple sens avec le premier dispositif sans fil au moyen de l'authentifiant, et établir une connexion avec le premier dispositif sans fil après la réussite de la validation ;
ou
réaliser une validation à quadruple sens avec le premier dispositif sans fil au moyen du code de connexion de dispositif en guise de clé prépartagée ; vérifier si le premier dispositif sans fil et le dispositif sans fil ont l'un et l'autre le code de connexion de dispositif ; et établir une connexion avec le premier dispositif sans fil après la réussite de la vérification.
